# FASCICULE DE BREVET EUROPEEN

(11) **EP 2 098 847 B1**
(45) Date de publication et mention de la délivrance du brevet: **18.01.2012**
(21) Numéro de dépôt: 09152992.5
(22) Date de dépôt: 17.02.2009
(51) Int. Cl.: G01M 5/00

(54) **Contrôle du comportement mécanique d'un système de support à mât comportant un fût solidaire d'une plaque d'appui fixée sur un massif de fondation par une pluralité de tiges de scellement.**
Kontrolle des mechanischen Verhaltens eines Haltesystems mit Masten, das eine formschlüssige Verbindung aus einem Schaft und einer Auflagerplatte umfasst, die auf einem Fundament mithilfe einer Vielzahl von Ankerstangen befestigt ist.
Control of the mechanical behaviour of a support system with mast comprising a shaft solidly attached to a support plate fixed to a foundation block by a plurality of foundation bolts.

(30) Priorité: 03.03.2008 FR 0801152
(43) Date de publication de la demande: 09.09.2009
(73) Titulaire: Roch Service, 95800 Cergy (FR)
(72) Inventeur: Gaillet, Romain, 50000, SAINT LO (FR); L'Héritier, François, 95250, BEAUCHAMP (FR); Motz, Didier, 95800, COURDIMANCHE (FR)
(74) Mandataire: Derambure, Christian

(56) Documents cités:
- EP-A- 0 638 794
- FR-A- 2 807 519
- US-B1- 6 314 376

## Description

L'invention est relative au contrôle du comportement mécanique d'un système de support à mât comportant un fût solidaire d'une plaque d'appui fixée sur un massif de fondation par une pluralité de tiges de scellement.

Elle concerne plus particulièrement et en premier lieu, un procédé de contrôle du comportement mécanique d'un système de support à mât sélectionné pour être spécifiquement du type comportant un fût solidaire, avec ou sans goussets de rigidification, d'une plaque d'appui fixée sur un massif de fondation par une pluralité de tiges de scellement, lesquelles sont ancrées dans le massif de fondation et traversent une pluralité de lumières de la plaque d'appui réparties autour du fût, des écrous et - le cas échéant des contre écrous - étant vissés sur leurs parties saillantes au dessus de la plaque d'appui et serrés sur sa face supérieure avec des rondelles associées, la plaque d'appui reposant soit sur le massif de fondation directement ou par l'intermédiaire d'une semelle supplémentaire semi rigide présentant des trous de passage pour des tiges de scellement, soit sur des écrous avec des rondelles associées préalablement vissés sur les tiges de scellement, le cas échéant, un bloc en béton recouvrant l'ensemble de la plaque d'appui et des tiges de scellement.

L'invention concerne en second lieu un dispositif pour la mise en oeuvre du procédé.

On connaît des procédés et dispositifs pour vérifier la stabilité et la résistance à la flexion d'un mât dressé dont le fût est ancré directement en partie basse dans un massif de fondation. Les mâts concernés sont typiquement des supports d'éclairage, de signalisation ou analogue. Fréquemment, les fûts de tels mâts comportent en partie basse une porte d'accès à un logement pour des moyens électriques (connectique par exemple). Une telle vérification est importante en ce qu'elle vise à s'assurer de la sécurité structurale des mâts en question, ainsi que de leur aptitude au service, notamment lorsqu'ils sont soumis à des contraintes extérieures, telles que le vent. Une telle vérification peut porter soit sur un mât nouvellement installé soit sur un mât déjà installé de plus longue date, dans le cadre de contrôles périodiques. Une telle vérification est cruciale car une simple inspection visuelle d'un mât peut conduire à penser qu'il serait dangereux alors qu'il ne peut être que seulement inesthétique. Inversement, il existe des mâts qui ne sont pas conformes, voire même dangereux, alors qu'une inspection visuelle ne permet pas de le déterminer.

La note d'information du SETRA - Service d'Etudes Techniques des Routes et Autoroutes - de mars 2003 intitulée « Eclairage du réseau des routes nationales - Recommandations pour le contrôle de la stabilité des supports par un essai de chargement statique » expose selon quel mode opératoire il est acceptable de procéder à des essais de chargement statique pour détecter le mauvais état des supports d'éclairage.

Selon le procédé décrit dans le document EP-A-0 638 794, on soumet le fût du mât à vérifier, au dessus de l'ancrage du fût dans le massif de fondation, à une force horizontale croissante et on mesure simultanément la force appliquée et la déviation latérale horizontale du fût du mât. La variation de la déviation par rapport à la force peut être modélisée comme une fonction mathématique ou, visuellement, par un graphe dans lequel la force est repérée par l'axe des ordonnées et la déviation par l'axe des abscisses ou inversement, la courbe étant représentative de la dite fonction. Une telle courbe correspond à la raideur du système, et s'apparente, dans sa partie linéaire et lorsque l'ancrage est stable, à la loi de Hooke. On interprète une fonction linéaire de la force par rapport à la déviation (ou une courbe rectiligne) comme signifiant une déformation du mât dans la zone de déformation élastique, tandis que l'on interprète une fonction non linéaire (ou une courbe incurvée) de la déviation par rapport à la force comme signifiant une déformation du mât dans la zone de déformation plastique et/ou un ancrage non stable du fût du mât. On interrompt ce processus lorsque la force appliquée atteint une valeur de consigne prédéfinie (correspondant par exemple à la charge de vent maximum auquel on souhaite que le mât puisse résister) ou lorsque l'on constate que la fonction qui au début était linéaire, devient non linéaire ou lorsque la courbe représentative de la fonction - qui était rectiligne - s'incurve avec typiquement une diminution de pente.

Un dispositif pour la mise en oeuvre du procédé selon le document EP-A-0 638 794 comporte une unité apte à appliquer une force horizontale croissante au fût du mât à vérifier, des moyens de mesure de la force appliquée au fût du mât et la déviation latérale de celui-ci par suite de cette force appliquée, et des moyens de traitement de la force et de la déviation mesurée afin d'établir la fonction de la première par rapport à la seconde.

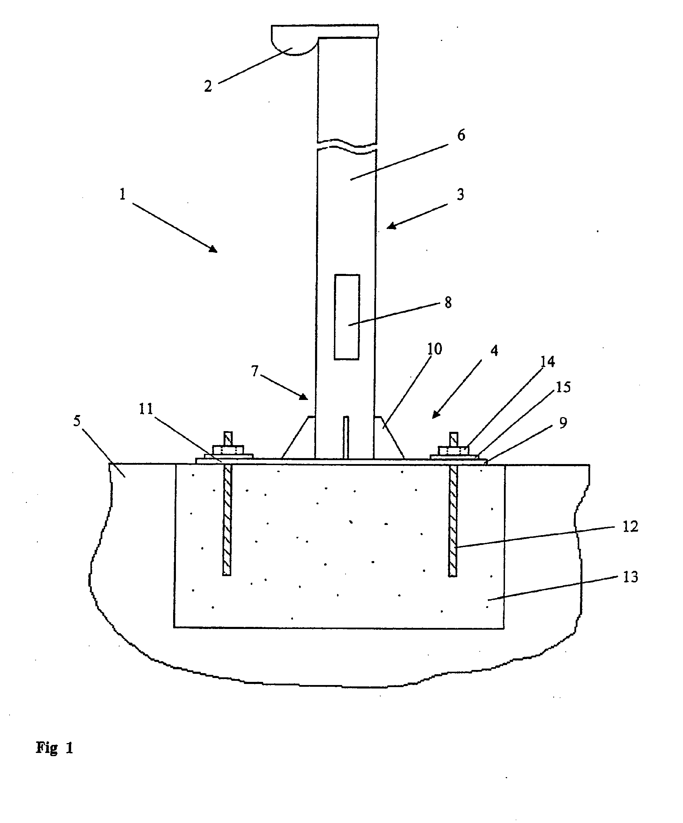

Le document EP-A-0 943 079 (ou son homologue US 6314376) décrit des perfectionnements au procédé et au dispositif décrits précédents, le fût du mât étant également directement ancré dans le massif de fondation (voir figure 1 du document). On soumet le fût du mât à vérifier dans une première étape à la force horizontale croissante précédemment décrite et dans une seconde étape à un effort horizontal décroissant. On mesure la force appliquée et la déviation latérale du fût du mât dans ces deux étapes. On modélise la variation de la force par rapport à la déviation comme une fonction mathématique tant pour la première étape que pour la seconde étape ou, visuellement, par un graphe Force/Déviation comportant deux courbes : une courbe dite de charge et une courbe dite de décharge. Après cette première phase, on réalise, dans une seconde phase, les mêmes opérations que dans la première phase, dans le même axe mais dans le sens opposé. On peut ainsi modéliser la variation de la force par rapport à la déviation comme une fonction mathématique tant pour la première étape que pour la seconde étape de cette seconde phase ou, visuellement, par un second graphe comportant lui-aussi deux courbes : une courbe dite de charge et une courbe dite de décharge. On tire des modélisations réalisées des conclusions quant à la résistance du mât et de son ancrage : endommagement du fût du mât ou déport de son ancrage.

Le document EP-A-0 894 250 décrit un perfectionnement au procédé et au dispositif du document EP-A-0 943 079, le fût du mât étant également directement ancré dans le massif de fondation (voir figure 1 du document). Le procédé prévoit d'interpréter une divergence entre deux fonctions linéaires (ou de pentes des courbes représentatives des fonctions) respectivement pour une sollicitation horizontale croissante dans un sens d'un axe et pour une sollicitation horizontale croissante dans l'autre sens de ce même axe comme un critère de la formation d'au moins une fissure dans le mât.

Il existe des mâts dont le fût n'est pas directement ancré dans un massif de fondation comme il est prévu dans les documents EP-A-0 638 794, EP-A-0 943 079 et EP-A-0 894 250, mais dont le fût est rigidement solidaire à son extrémité libre inférieure d'une plaque transversale d'appui, laquelle plaque d'appui est rigidement fixée à et sur un massif de fondation, indirectement, par une pluralité de tiges de scellement. Ce sont les tiges de scellement - non le fût lui-même - qui sont ancrées en partie inférieure dans le massif de fondation. Ces tiges de scellement sont typiquement au nombre de quatre, à 90° les unes des autres, pour les ouvrages d'éclairage public, mais plus nombreuses et régulièrement réparties autour du fût pour les ouvrages de stade. Ces tiges de scellement traversent une même pluralité de lumières ménagées sur la plaque d'appui et également régulièrement réparties autour du fût. Des écrous et le cas échéant des contre écrous sont vissés sur les parties saillantes supérieures des tiges de scellement au dessus de la plaque d'appui et sont serrés sur sa face supérieure avec association de rondelles. Selon les cas, il est prévu - ou non - des goussets de rigidification s'étendant entre fût proprement dit et la plaque d'appui, en étant rigidement fixés à eux.

Dans une réalisation d'un tel système de montage, la plaque d'appui repose directement sur le massif de fondation.

Dans une autre réalisation, la plaque d'appui repose sur le massif de fondation indirectement par l'intermédiaire d'une semelle supplémentaire semi rigide présentant des trous de passage pour des tiges de scellement.

Dans une autre réalisation, la plaque d'appui repose sur des écrous avec association de rondelles préalablement vissés sur les tiges de scellement.

Dans une variante d'un tel système de montage, un bloc en béton recouvre l'ensemble de la plaque d'appui et des tiges de scellement.

Les désordres de tels systèmes de support à mât peuvent provenir :
- du fût lui-même, par exemple dans le cas d'une corrosion, d'une ou plusieurs fissures, ou encore d'un sous dimensionnement du mât par rapport à l'effort exercé,
- et/ou du système de montage du fût : massif de fondation instable, sous-dimensionné, ou à pression trop faible, plaque d'appui défectueuse, tiges de scellement défectueuses, éventuels goussets défectueux ou insuffisamment solidarisés au fût ou à la plaque d'appui, écrous, contre écrous, rondelles défectueux ou insuffisamment serrés, éventuelle semelle semi rigide défectueuse, liaison défectueuse entre ces pièces...

Les documents EP-A-0 638 794, EP-A-0 943 079 et EP-A-0 894 250 ne visent pas les réalisations de systèmes à mât qui viennent d'être mentionnées et ne prévoient pas d'identifier et de tirer des conclusions sur les désordres dont ils peuvent être l'objet.

Par conséquent, il existe un besoin de contrôle du comportement mécanique d'un système de support à mât du type comportant, non pas un fût directement ancré dans le massif d'ancrage, mais un fût solidaire, avec ou sans goussets de rigidification, d'une plaque d'appui fixée sur un massif de fondation par une pluralité de tiges de scellement, lesquelles sont ancrées dans le massif de fondation et traversent une pluralité de lumières de la plaque d'appui réparties autour du fût, des écrous et le cas échéant des contre écrous étant vissés sur leurs parties saillantes au dessus de la plaque d'appui et serrés sur sa face supérieure avec des rondelles associées, la plaque d'appui reposant soit sur le massif de fondation directement ou par l'intermédiaire d'une semelle supplémentaire semi rigide présentant des trous de passage pour des tiges de scellement soit sur des écrous avec des rondelles associées préalablement vissés sur les tiges de scellement, le cas échéant, un bloc en béton recouvrant l'ensemble de la plaque d'appui et des tiges de scellement.

Il existe en effet le besoin d'identifier les éventuels désordres de tels systèmes de support à mât, qu'ils proviennent du fût lui-même et/ou du système de montage du fût, comme il a été indiqué plus haut.

L'invention vise à satisfaire ce besoin.

A cet effet, et selon un premier aspect, l'invention concerne un procédé de contrôle du comportement mécanique d'un système de support à mât comportant un fût solidaire d'un massif de fondation, dans lequel :
- dans une première étape :
   ○ on applique au fût, au dessus du massif de fondation, un effort sensiblement horizontal croissant F1, dans une direction x-x correspondant à l'intersection d'un plan axial de référence et d'un plan transversal, au plus jusqu'à atteindre une valeur de consigne prédéfinie ou lorsque souhaité, l'application de la dite force F1 causant une déviation latérale D1 du fût,
   ○ on mesure la force F1 et la déviation D1 et on établit la fonction f1 de la force F1 en fonction de la déviation D1, respectivement sa courbe représentative C1, dite de chargement, sur un graphe Force F/ Déviation D,
- dans une deuxième étape :
   ○ on applique au fût, un effort sensiblement horizontal décroissant F2, dans le même axe x-x que la force F1 mais dans le sens opposé,
   ○ on mesure la force F2 et la déviation D2 et on établit la fonction f2 de la force F2 en fonction de la déviation D2 respectivement sa courbe représentative C2, dite de déchargement,
- dans une phase ultérieure,
   ○ on détermine d'abord, à partir des courbes C1 et C2, un ensemble de paramètres:
      ➢ dans quelle mesure la courbe C1 et la courbe C2, respectivement, est en tout ou partie linéaire ou non, avec ou non point d'inflexion ou point de courbure, et en cas de changement de pente, l'importance de celui-ci,
      ➢ la disposition relative des deux courbes C1 et C2,
      ➢ les pentes α1 et α2 des courbes C1 et C2 pour F=0, ainsi que leur évolution,
      ➢ l'absence ou l'existence, et le cas échéant l'importance d'un déplacement résiduel Dr de la courbe C2 pour F=0,
   ○ et on interprète les dits paramètres pour en tirer une conclusion sur l'état du fût et déterminer ses éventuelles pathologies,
   caractérisé en ce que :

- on sélectionne préalablement un système de support à mât comportant un fût non pas ancré directement dans le massif de fondation mais solidaire, avec ou sans goussets de rigidification, d'une plaque d'appui fixée sur le massif de fondation par une pluralité de tiges de scellement, lesquelles sont ancrées dans le massif de fondation et traversent une pluralité de lumières de la plaque d'appui réparties autour du fût, des écrous et - le cas échéant des contre écrous - étant vissés sur leurs parties saillantes au dessus de la plaque d'appui et serrés sur sa face supérieure avec des rondelles associées, la plaque d'appui reposant soit sur le massif de fondation directement ou par l'intermédiaire d'une semelle supplémentaire semi rigide présentant des trous de passage pour des tiges de scellement soit sur des écrous, avec des rondelles associées, préalablement vissés sur les tiges de scellement, le cas échéant, un bloc en béton, recouvrant l'ensemble de la plaque d'appui et des tiges de scellement,
- on applique les opérations de la première étape et de la deuxième étape,
- on détermine l'ensemble des dits paramètres à partir des courbes C1 et C2,
- et on interprète les dits paramètres pour en tirer également une conclusion sur l'état du système de montage du fût, à savoir sur l'état du massif de fondation, de la plaque d'appui, des éventuels goussets de rigidification, des tiges de scellement, des écrous et éventuels contre écrous, de l'éventuelle semelle semi rigide, des éventuels écrous et rondelles associées, et de leurs liaisons respectives, et déterminer ses éventuelles pathologies.

Dans une réalisation, on interprète la courbe de chargement C1 et la courbe de déchargement C2 quasi linéaires et parallèles et un très petit déplacement résiduel Dr plus comme signifiant que le système de support à mât est normal, sans plasticité du matériau constitutif et sans désordre concernant le système de montage, les courbes C1 et C2 de chargement et de déchargement étant qualifiées de normales ou de référence.

Dans une réalisation, on interprète une courbe de chargement C1 et une courbe de déchargement C2 quasi linéaires et parallèles, qui pour F=0 ont des pentes α1 et α2 plus faibles que la normale et un déplacement résiduel Dr de moyen à grand par rapport à la normale, comme résultante d'un montage sur écrous engendrant une rigidité plus faible du système de montage ou d'une pathologie d'un désordre concernant une tige de scellement ou son écrou de serrage.

Dans une réalisation, on interprète une courbe de chargement C1 qui pour F=0 a une pente α1 plus faible que la normale puis, rapidement, a une pente voisine de la normale, et une courbe de déchargement C2 proche de la courbe C1, comme la pathologie d'un écrou de serrage desserré, ou d'un système de montage présentant un jeu ou d'une plasticité au niveau de la porte.

Dans une réalisation, on interprète une courbe de chargement C1 et une courbe de déchargement C2 linéaires mais pouvant montrer une légère courbure, présentant des pentes α1 et α2 nettement différentes pour F=0 et un déplacement résiduel Dr plus grand que la normale, comme la pathologie d'un désordre dans le massif de fondation tel qu'un massif instable ou sous-dimensionné, ou bien encore d'un sol présentant une pression trop faible.

Dans une réalisation, on interprète la courbe de chargement C1 qui pour F=0 a une pente α1 plus faible que la normale puis prend rapidement une pente plus proche de la normale et une courbe de déchargement C2 présentant des pentes α1 et α2 nettement différentes quelque soit F et un déplacement résiduel Dr plus grand que la normale, comme la pathologie d'un massif de fondation instable avec un jeu entre le massif et le sol ou sous-dimensionné avec un jeu entre le massif et le sol ou d'un écrou insuffisamment serré et un massif instable.

Dans une réalisation, on interprète une courbe de chargement C1 quasi linéaire avec point d'inflexion intermédiaire, une courbe de déchargement C2 quasi linéaire et parallèle aux tronçons linéaires de la courbe de chargement C1, et un déplacement résiduel Dr plus grand que la normale, comme la pathologie d'une tige de scellement sortant du massif de fondation et un fût ne revenant pas dans sa position initiale.

Dans une réalisation, on interprète une courbe de chargement C1 quasi linéaire avec point d'inflexion intermédiaire, une courbe de déchargement C2 quasi linéaire avec point d'inflexion intermédiaire, pouvant être quasi parallèle à la courbe de chargement C1, comme la pathologie d'une tige de scellement sortant du massif de fondation et un fût reprenant sa position initiale par la suite.

Dans une réalisation, on interprète une courbe de chargement C1 qui, à partir de F=0 est non linéaire avec très rapidement une diminution de la pente α1, puis est quasi linéaire après avoir repris une pente normale, une courbe de déchargement C2 quasi linéaire et parallèle au tronçon linéaire de la première, et un déplacement résiduel Dr plus grand que la normale, comme la pathologie d'une tige de scellement initialement sortie du massif de fondation et y rentrant par la suite dans le cas d'un montage sur écrous ou un fût initialement dévié par rapport à la normale, reprenant une position dite normale, typiquement en position verticale. Dans une réalisation, on interprète une courbe de chargement C1 relativement linéaire tout en pouvant présenter une légère courbure, une courbe de déchargement C2 présentant un arrondi important vers F=0, et un déplacement résiduel Dr de moyen à plus grand que la normale, comme la pathologie d'un écrou insuffisamment serré ou manquant, avec un système de montage comportant une semelle semi rigide.

Dans une réalisation, on interprète une courbe de chargement C1 quasi linéaire à partir de F=0, puis présentant une diminution importante de la pente α1, celle-ci restant positive, une courbe de déchargement C2 quasi linéaire et parallèle à C1 dans son tronçon linéaire, et un déplacement résiduel Dr de moyen à grand par rapport à la normale, comme la pathologie d'un écrouissage du matériau constitutif de la plaque d'appui, des tiges de scellement, des rondelles ou du fût en dessous de la zone d'application des forces F1 et F2, ou encore une fissure en dessous de cette zone.

Dans une réalisation, on interprète une courbe de chargement C1 quasi linéaire à partir de F=0, puis présentant une diminution importante de la pente α1, celle-ci devenant négative, une courbe de déchargement C2 quasi linéaire et parallèle à C1 dans son tronçon linéaire, et un déplacement résiduel Dr de moyen à grand par rapport à la normale, comme la pathologie d'une striction du matériau constitutif de la plaque d'appui, des tiges de scellement, du fût en dessous de la zone d'application des forces F1 et F2, ou encore une fissure en dessous de cette zone.

Dans une réalisation, on interprète une courbe de chargement C1 qui pour F=0 a une pente α1 plus faible que la normale puis reprend rapidement une pente α1 voisine de la normale, puis présente une diminution importante de la pente α1, celle-ci restant positive, une courbe de déchargement C2 quasi linéaire et parallèle à C1 dans son tronçon linéaire, et un déplacement résiduel Dr de moyen à grand par rapport à la normale, comme la pathologie d'un écrouissage du matériau constitutif de la plaque d'appui, des tiges de scellement, des rondelles, du fût en dessous de la zone d'application des forces F1 et F2, ou encore une fissure en dessous de cette zone.

Dans une réalisation, on interprète une courbe de chargement C1 qui pour F=0 a une pente α1 plus faible que la normale puis a une pente α1 voisine de la normale, puis présente une diminution importante de la pente α1, celle-ci devenant négative, une courbe de déchargement C2 quasi linéaire et parallèle à C1 dans son tronçon linéaire, et un déplacement résiduel Dr de moyen à grand par rapport à la normale, comme la pathologie d'une striction du matériau constitutif de la plaque d'appui, des tiges de scellement, du fût en dessous de la zone d'application des forces F1 et F2, ou encore une fissure en dessous de cette zone.

Dans une réalisation, on interprète une courbe de chargement C1 qui à partir de F=0 est quasi linéaire, puis bien après change de pente et a une pente supérieure, une courbe de déchargement C2 proche de la courbe C1, et un déplacement résiduel Dr de moyen à grand par rapport à la normale, comme la pathologie d'une plasticité du matériau entre la zone d'application des forces F1 et F2 et la zone de mesure des déplacements D1 et D2, ou un écrou de serrage desserré, ou une fissure.

Dans une réalisation, on interprète une courbe de chargement C1 relativement linéaire à partir de F=0, puis présentant une diminution très importante de la pente α1 avec déplacement D1 nul et diminution de la force F1, une courbe de déchargement C2 relativement linéaire avec une pente α2 différente de α1 et typiquement inférieure, et un déplacement résiduel Dr petit, comme la pathologie d'une zone de striction ou d'une fissure du matériau entre la zone d'application des forces F1 et F2 et la zone de mesure des déplacements D1 et D2.

Dans une réalisation, on interprète une courbe de chargement C1 qui pour F=0 a une pente α1 plus faible que la normale puis, rapidement, a une pente α1 voisine de la normale, puis présente une diminution importante de la pente α1, celle-ci restant positive, et une courbe de déchargement C2 quasi parallèle à la courbe C1, pour ses deux premières parties, et qui pour F=0 a une pente α2 plus faible que la normale, voire nulle, comme la pathologie d'un écrou desserré et d'une plasticité du matériau.

Dans une réalisation, on interprète une courbe de chargement C1 relativement linéaire à partir de F=0, puis présentant une diminution très importante de la pente α1 avec déplacement D1 quasi nul et diminution de la force F1, une courbe de déchargement C2 relativement linéaire avec une pente α2 différente de α1 et typiquement supérieur, et un déplacement résiduel Dr plus grand que la normale, comme la pathologie d'une zone de striction entre la zone d'application des forces F1 et F2 et la zone de mesure des déplacements D1 et D2, avec plasticité sous la zone de mesure des déplacements D1 et D2, notamment au niveau de la plaque d'appui.

Selon une réalisation perfectionnée, après la deuxième étape :
- dans une troisième étape,
   ○ on réitère les opérations de la première étape dans la direction x-x, mais dans le sens opposé, l'application de la force F1' causant une déviation latérale D1' du fût,
   ○ on mesure la force F1' appliquée et la déviation D1' et on établit la fonction f1' de la force F1' en fonction de la déviation D1' ou sa courbe représentative C1', dite de chargement, sur un graphe Force F / Déviation D,
- dans une quatrième étape,
   ○ on réitère les opérations de la deuxième étape dans la direction x-x mais dans le sens opposé au sens d'application de la force F1',
   ○ on mesure la force F2' appliquée et la déviation D2' et on établit la fonction f2' de la force F2' en fonction de la déviation D2', respectivement sa courbe représentative C2', dite de déchargement, sur un graphe Force F / Déviation D,
- dans une phase ultérieure, à partir des courbes réalisées C'1 et C'2, on détermine les mêmes paramètres que pour les courbes C1 et C2,
- puis, on interprète les dits paramètres pour en tirer une conclusion supplémentaire en relation avec l'orientation, sur l'état du système de montage du fût, à savoir sur l'état du massif de fondation, de la plaque d'appui, des éventuels goussets de rigidification, des tiges de scellement, des écrous et éventuels contre écrous, de l'éventuelle semelle semi rigide, des éventuels écrous et rondelles associées, et de leurs liaisons respectives, et déterminer leurs éventuelles pathologies.

Selon une réalisation encore plus perfectionnée, après la quatrième étape :
- dans une cinquième étape,
   ○ on réitère les opérations de la première étape dans une direction y-y sensiblement perpendiculaire à la direction x-x, l'application de la force F1 causant une déviation latérale D1 du mât,
   ○ on mesure la force F1 appliquée et la déviation D1 et on établit la fonction f1 de la force F1 en fonction de la déviation D1 ou sa courbe représentative C1, dite de chargement, sur un graphe Force F / Déviation D,
- dans une sixième étape,
   ○ on réitère les opérations de la deuxième étape dans la direction y-y mais dans le sens opposé au sens d'application de la force F1,
   ○ on mesure la force F2 appliquée et la déviation D2 et on établit la fonction f2 de la force F2 en fonction de la déviation D2, respectivement sa courbe représentative C2, dite de déchargement, sur un graphe Force F / Déviation D,
- dans une septième étape,
   ○ on réitère les opérations de la cinquième étape dans la direction y-y mais dans le sens opposé, l'application de la force F1' causant une déviation latérale D1' du mât,
   ○ on mesure la force F1' appliquée et la déviation D1' et on établit la fonction f1' de la force F1' en fonction de la déviation D1' ou sa courbe représentative C1', dite de chargement, sur un graphe Force F / Déviation D,
- dans une huitième étape,
   ○ on réitère les opérations de la sixième étape dans la direction y-y mais dans le sens opposé, l'application de la force F2' causant une déviation latérale D2' du mât,
   ○ on mesure la force F2' appliquée et la déviation D2' et on établit la fonction f2' de la force F2' en fonction de la déviation D2' ou sa courbe représentative C2', dite de déchargement, sur un graphe Force F / Déviation D,
- dans une phase ultérieure, à partir des courbes C1, C2, C'1 et C'2 réalisées dans la direction y-y, on détermine les mêmes paramètres que pour les courbes C1, C2, C1' et C2' réalisées dans la direction x-x,
- puis, on interprète les dits paramètres pour en tirer une conclusion supplémentaire en relation avec l'orientation, sur l'état du système de montage du fût, à savoir sur l'état du massif de fondation, de la plaque d'appui, des éventuels goussets de rigidification, des tiges de scellement, des écrous et éventuels contre écrous, de l'éventuelle semelle semi rigide, des éventuels écrous et rondelles associées, et de leurs liaisons respectives, et déterminer leurs éventuelles pathologies.

Dans un premier mode de réalisation, la direction x-x est sensiblement perpendiculaire au plan de la porte du système de support à mât.

Dans un second mode de réalisation, la direction x-x est sensiblement orientée à 45° par rapport au plan de la porte du système de support à mât.

Selon un second aspect, l'invention propose un dispositif pour la mise en oeuvre du procédé qui vient d'être décrit, qui comporte :
- des moyens pour appliquer au fût du mât, au dessus du massif de fondation et de la plaque d'appui et dans une zone d'application de force, un effort sensiblement horizontal croissant puis décroissant,
- des moyens de mesure de la force appliquée au fût du mât dans une zone de mesure de forces,
- des moyens de mesure de la déviation du fût du mât causée par les forces appliquées,
- des moyens de traitement aptes à établir la fonction f de la force F appliquée dans une direction et un sens donnés en fonction de la déviation D, respectivement sa courbe représentative de chargement ou de déchargement sur un graphe Force F / Déviation D,
- des moyens de traitement aptes à déterminer à partir des courbes l'ensemble des paramètres nécessaires au contrôle, de manière à permettre leur interprétation pour en tirer une conclusion sur l'état du fût et l'état du système de montage du fût, à savoir sur l'état du massif de fondation, de la plaque d'appui, des éventuels goussets de rigidification, des tiges de scellement, des écrous et éventuels contre écrous, de l'éventuelle semelle semi rigide, des éventuels écrous et rondelles associées, et de leurs liaisons respectives, et déterminer leurs éventuelles pathologies.

Dans une réalisation, le dispositif comporte en outre des moyens de visualisation et/ou d'impression des courbes de chargement et de déchargement.

Dans une réalisation, le dispositif comporte en outre des moyens de comparaison des courbes de chargement et de déchargement avec des courbes théoriques correspondant à des pathologies déterminées.

On décrit maintenant plusieurs modes de réalisation de l'invention à l'aide des dessins dans lesquels :
- la figure 1 est une vue schématique d'un système de support à mât du type de celui spécialement sélectionné pour le procédé et la mise en oeuvre du dispositif selon l'invention, ce système de support à mât présentant un système de montage standard ou à plat sur massif, la figure étant une vue en coupe par un plan axial vertical passant par deux tiges de scellement,

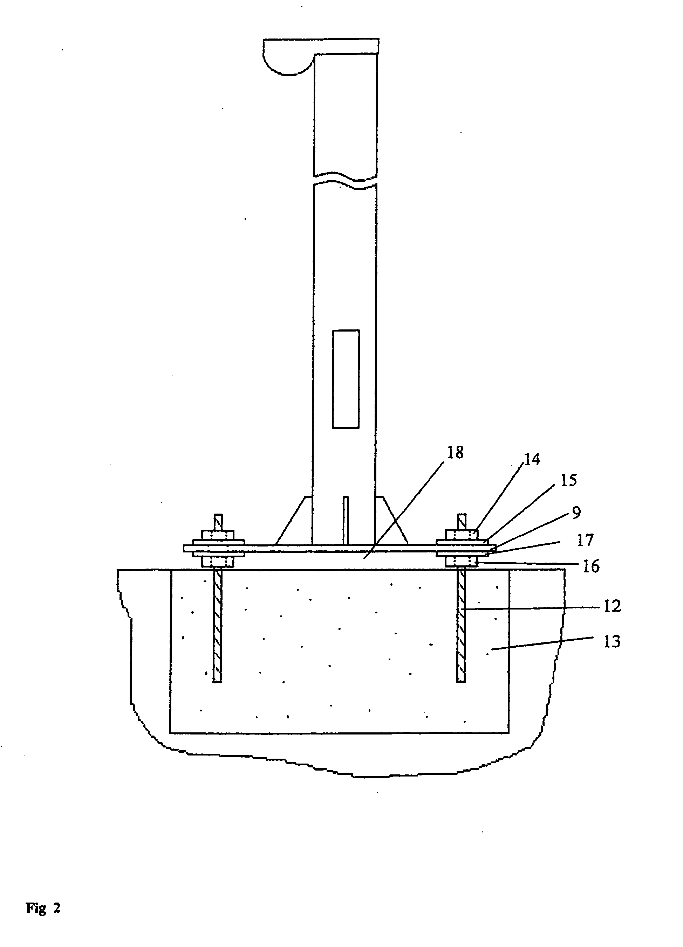

- la figure 2 est une vue schématique d'un autre système de support à mât du type de celui spécialement sélectionné pour le procédé et la mise en oeuvre du dispositif selon l'invention, ce système de support à mât présentant un système de montage sur écrous, la figure étant une vue en coupe par un plan axial vertical passant par deux tiges de scellement,

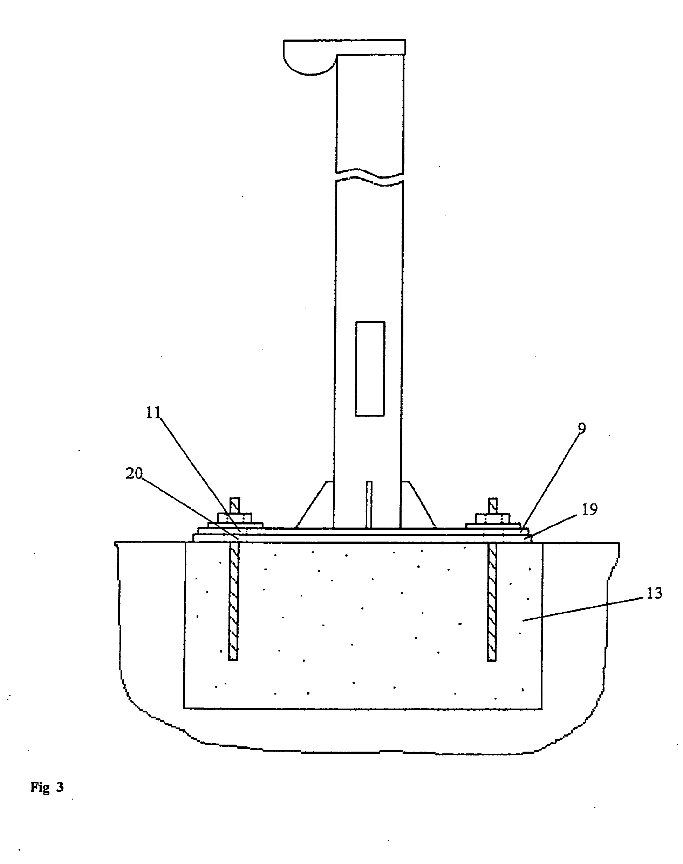

- la figure 3 est une vue schématique d'un autre système de support à mât du type de celui spécialement sélectionné pour le procédé et la mise en oeuvre du dispositif selon l'invention, ce système de support à mât présentant un système de montage sur semelle semi rigide, la figure étant une vue en coupe par un plan axial vertical passant par deux tiges de scellement,

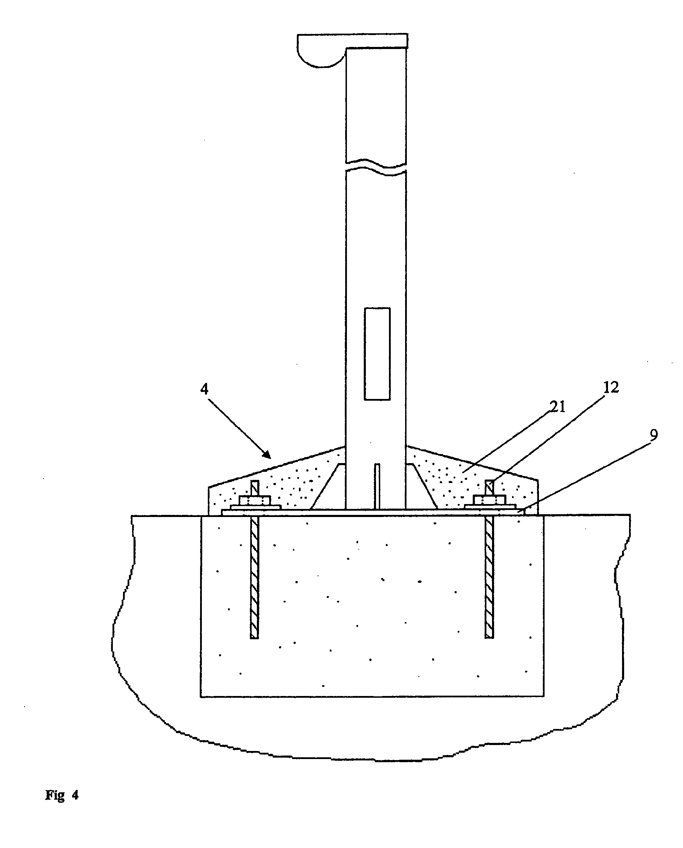

- la figure 4 est une vue schématique d'un autre système de support à mât du type de celui spécialement sélectionné pour le procédé et la mise en oeuvre du dispositif selon l'invention, ce système de support à mât présentant un système de montage avec pointe de diamant, la figure étant une vue en coupe par un plan axial vertical passant par deux tiges de scellement,

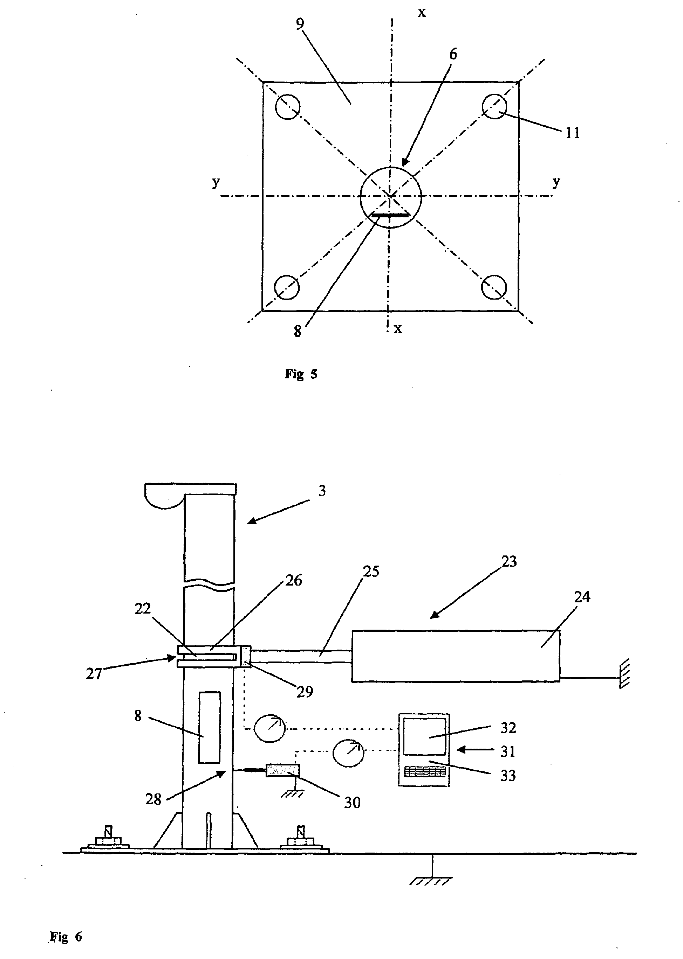

- la figure 5 est une vue schématique de dessus du système de support à mât illustrant des directions x-x et y-y de contrôle,
- la figure 6 est un schéma illustrant tant le procédé que le dispositif selon l'invention,

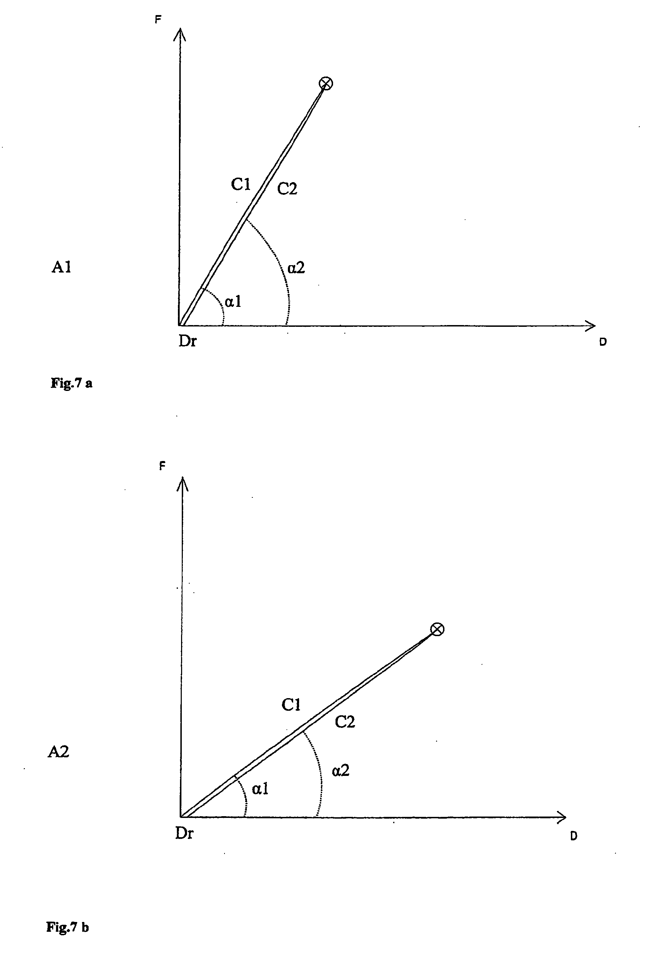

- les figures 7A à 7Q, qui en tant que telles font partie intégrante de la description, sont dix-sept graphes typiques obtenus par le procédé ou au moyen du dispositif selon l'invention, correspondant à des pathologies particulières de désordre ou de non-conformité ; sur ces graphes, la croix correspond à la fin de la courbe de chargement et le début de la courbe de déchargement.

Le procédé selon l'invention est destiné au contrôle de comportement d'un système 1 de support à mât auquel dressé verticalement ou incliné sur la verticale. Un tel système 1 à mât est typiquement un support d'éclairage 2, de signalisation, de drapeau ou analogue.

Un tel système 1 comporte d'une part un mât proprement dit 3 incluant un fût 6 et d'autre part un système 4 de montage du mât 3, et plus précisément de son fût 6, pour assurer une solidarisation rigide en partie extrême inférieure à un appui fixe tel que le sol 5, comme on le verra.

Le plus fréquemment, le fût 6 est, est pourvu en partie basse 7 d'une ou plusieurs portes 8 (ou équivalent tel qu'une trappe) d'accès à un logement pour des moyens électriques (connectique par exemple).

Le procédé selon l'invention s'applique à un système à mât 1 comportant un système 4 spécifique de montage du mât 3, respectivement du fût 6.

Le procédé selon l'invention comporte donc une sélection préalable du système 1 à mât auquel le procédé va être appliqué. Cette sélection porte sur le système 4 de montage du fût 6.

A cet effet, d'une part, on ne sélectionne pas un système 1 de support à mât comportant un fût 6 solidarisé ancré directement dans un massif de fondation 13.

D'autre part, au contraire, on sélectionne un système 1 de support à mât comportant un système 4 de montage du fût 6, tel que celui-ci est rendu indirectement solidaire du massif de fondation 13.

On décrit maintenant plusieurs réalisations de système 4 de montage d'un tel système 1 à mât, ainsi sélectionnés pour la mise en oeuvre du procédé.

A l'extrémité libre basse du fût 6 est fixée solidement, rigidement, et perpendiculairement (en général), typiquement par soudage, une plaque d'appui transversale 9, rigide, s'étendant radialement autour du fût 6 sur une certaine distance.

La plaque d'appui 9 comporte et présente une pluralité de lumières 11, pouvant être de différentes formes appropriées, en règle générale régulièrement réparties autour du fût 6 en étant écartées de lui. Par exemple, dans le cas de la réalisation de la figure 5, il est prévu quatre lumières 11 à 90° les unes des autres.

La pluralité de lumières 11 a pour fonction de permettre le passage d'une même pluralité de tiges de scellement 12.

Le cas échéant, il est prévu un certain nombre de goussets de rigidification 10, s'étendant entre le fût 6 et la plaque d'appui 9, en étant rigidement fixés à eux.

Les mots « bas », « inférieur », « haut », « supérieur »... se réfèrent au système 1 de support à mât en situation. En outre, pour la commodité de la description, celle-ci est faite en supposant le fût 6 vertical, bien qu'il puisse, dans certaines réalisations être incliné par rapport à la verticale. Les mots « vertical » et « horizontal » ne sont donc pas limitatifs.

Le système 4 de montage comporte la plaque d'appui 9 et la pluralité de tiges de scellement 12 disposées verticalement, traversant vers leur partie supérieure la plaque d'appui 9 grâce aux lumières 11.

Le système 4 de montage comporte également le massif de fondation 13 réalisé par exemple en béton dans une excavation ménagée dans le sol 5, et donc solidaire de lui.

Les tiges de scellement 12 sont ancrées dans le massif de fondation 13 par leur partie s'étendant vers le bas.

Le système 4 de montage comporte également des écrous 14 et des contre écrous le cas échéant vissés sur les parties saillantes des tiges de scellement 12 au dessus de la plaque d'appui 9, serrés sur la face supérieure de la plaque d'appui 9 avec association de rondelles 15, de manière à déborder des lumières 11.

Dans le cas où, selon cette première réalisation (figure 1), la plaque d'appui 9 repose directement sur le massif de fondation 13, le montage est typiquement défini comme étant « standard » ou « à plat sur massif ».

Le procédé selon l'invention s'applique à cette première réalisation de système 4 de montage et, de ce fait, le procédé comporte une étape préliminaire de sélection d'une telle première réalisation de système 4 de montage.

On entend par là que la personne qui va mettre en oeuvre le procédé selon l'invention a identifié que le système 1 à mât dont il s'agit de contrôler le comportement comporte un système 4 de montage selon cette première réalisation.

Une telle identification peut être faite de façon visuelle, outre qu'elle peut résulter des caractéristiques du système 1 à mât à contrôler remises à la personne en charge du contrôle.

Le procédé selon l'invention peut être mis en oeuvre également avec une deuxième réalisation de système 4 de montage (figure 2), le montage étant cette fois défini comme étant « sur écrous ».

Dans ce cas, la plaque d'appui 9 reposant, non pas directement sur le massif de fondation 13 mais sur des écrous 16, avec association de rondelles 17, préalablement vissés sur les tiges de scellement 12. D'autres écrous 14 sont serrés, avec association de rondelles 15, sur la surface supérieure de la plaque d'appui 9.

Le cas échéant, un mortier de rembourrage 18 peut être rajouté entre la face inférieure de la plaque d'appui 9 et la face supérieure du massif 13.

Le procédé selon l'invention s'applique à cette deuxième réalisation de système 4 de montage et, de ce fait, le procédé comporte une étape préliminaire de sélection d'une telle deuxième réalisation de système 4 de montage.

Le procédé selon l'invention peut être mis en oeuvre également avec une troisième réalisation de système 4 de montage (figure 3), le montage étant cette fois défini comme étant « sur semelle semi rigide ».

Dans ce cas, et par rapport au montage défini comme « standard » décrit plus haut, il est prévu entre la face inférieure de la plaque d'appui 9 et la face supérieur du massif 13, une semelle supplémentaire semi rigide 19. Cette semelle 19 a approximativement les dimensions du contour de la plaque d'appui 9 et présente aussi des lumières de passage 20 pour des tiges de scellement 12, analogues à celles 11 de la plaque appui 9 des figures 1 et 2. Cette semelle 19 est fabriquée avec un matériau à élasticité non linéaire, typiquement du caoutchouc ou du liège.

Le procédé selon l'invention s'applique à cette troisième réalisation de système 4 de montage et, de ce fait, le procédé comporte une étape préliminaire de sélection d'une telle troisième réalisation de système 4 de montage.

Le procédé selon l'invention peut être mis en oeuvre également avec une variante (figure 4), le montage étant cette fois défini comme étant « avec pointe de diamant ».

Dans ce cas, il est prévu au dessus du système 4 de montage, un bloc en béton 21, généralement de forme pyramidale, recouvrant l'ensemble de la plaque d'appui 9 et des tiges de scellement 12.

Le procédé selon l'invention s'applique à cette variante et, de ce fait, le procédé comporte une étape préliminaire de sélection d'une telle variante.

Le procédé de contrôle non destructif du comportement mécanique d'un système 1 de support à mât sélectionné selon les réalisations et variante qui viennent d'être décrits, a pour but de s'assurer de sa sécurité structurale, ainsi que de son aptitude au service, notamment lorsqu'il est soumis à des contraintes extérieures, telles que le vent.

Le procédé repose sur la technologie exposée dans ses grandes lignes dans les documents EP-A-0 638 794, EP-A-0 943 079, EP-A-0 894 250 et SETRA mentionnés ci-dessus et connus de l'homme du métier.

Le procédé est mis en oeuvre au moyen d'un dispositif représenté de façon purement schématique sur la figure 6.

Dans une première étape du procédé, on applique au fût 6 du mât 3, au dessus de son ancrage (4, 6) et dans une zone 22 d'application d'un effort sensiblement horizontal croissant F1, dans une direction x-x horizontale, correspondant à l'intersection d'un plan axial de référence et d'un plan transversal. Le plus souvent, la zone 22 est située au-dessus de la porte 8.

A cet effet, le dispositif comporte des moyens 23 pour appliquer au fût 6 du mât 3 la force sensiblement horizontale croissante souhaitée. Ces moyens peuvent comporter par exemple un bâti 24 fixe lorsque la force est appliquée, mais mobile autrement, des moyens 25 aptes à développer une force tels qu'un vérin et des moyens 26 pour appliquer la force en question sur le mât dans la zone 22. Par exemple, il peut être prévu un engin automoteur comportant des patins d'ancrage au sol lorsque souhaité, mais apte à être déplacé autour du mât 3 pour les différentes opérations à effectuer et d'être déplacé d'un mât à l'autre lorsqu'il s'agit de contrôler une série de mâts 3 disposés les uns à la suite des autres, comme des mâts 3 d'éclairage urbain.

Dans un premier mode de réalisation, la direction x-x est sensiblement perpendiculaire au plan de la porte 8 du système 1 de support à mât.

Dans un second mode de réalisation, préférentiel, la direction x-x est sensiblement orientée à 45° par rapport au plan de la porte 8.

L'application sur le fût 6 du mât 3 de la force F1 cause une certaine déviation latérale D1 de celui-ci.

On mesure la force F1 et la déviation D1, dans des zones de mesures du fût 6 du mât, respectivement 27, 28.

A cet effet, le dispositif comporte en premier lieu des moyens 29 de mesure de la force F1 appliquée au fût 6 du mât 3 dans la zone 22, et, en second lieu des moyens 30 de mesure de la déviation D1 du fût 6 du mât 3 dans la zone 28. Ces moyens 29, 30 peuvent être portés par l'engin automoteur précédemment mentionné, ou indépendamment l'un de l'autre.

On établit alors la fonction f1 de la force F1 en fonction de la déviation D1. Respectivement on établit la courbe C1, dite de chargement, représentative de la fonction f1, sur un graphe où la Force F est par exemple sur l'axe des ordonnées tandis que la Déviation D est sur l'axe des abscisses.

On poursuit la première étape au plus jusqu'à atteindre une valeur de consigne prédéfinie ou lorsque souhaité. Alors, on l'arête. La valeur de consigne prédéfinie correspond par exemple à la charge de vent maximum auquel on souhaite que le système 1 à mât puisse résister.

Dans une deuxième étape du procédé, on applique au fût 6 du mât 3 au dessus de son ancrage (4, 6) et dans la zone 22 d'application de force, un effort au moins sensiblement horizontal décroissant F2, dans la même direction x-x que la force F1, mais dans le sens diamétralement opposé.

A cet effet, le dispositif comporte des moyens pour appliquer au fût 6 du mât 3 la force de poussée décroissante souhaitée. Il s'agit le plus souvent des mêmes moyens 23 que précédemment, réglés convenablement.

On mesure la force F2 et la déviation D2 dans des zones de mesures, respectivement 27 et 28.

On établit alors la fonction f2 de la force F2 en fonction de la déviation D2, ou, comme précédemment, sa courbe C2, dite de déchargement, représentative de cette fonction.

A cet effet, le dispositif comporte des moyens 31 de traitement aptes à établir une fonction f de la force F dans une direction et un sens donnés en fonction de la déviation D appliquée ou sur un graphe Force F/ Déviation D sa courbe C représentative, qu'il s'agisse de la courbe dite de chargement C1 ou de la courbe dite de déchargement C2.

Dans une réalisation, le dispositif comporte en outre des moyens 32 de visualisation et/ou des moyens 33 d'impression des courbes C1 et C2 dites de chargement et de déchargement.

Dans une phase ultérieure, on détermine d'abord, à partir des courbes C1 et C2, un ensemble de paramètres qui serviront au contrôle, comme on le verra dans le détail par la suite.

Il s'agit en premier lieu du paramètre traduisant dans quelle mesure la courbe C1 et la courbe C2, respectivement, est en tout ou partie linéaire ou non, avec ou non point d'inflexion ou point de courbure, et en cas de changement de pente, l'importance de celui-ci.

Il s'agit en deuxième lieu de la disposition relative des deux courbes C1 et C2 : proches ou éloignées, parallèles ou non...

Il s'agit en troisième lieu de pentes α1 et α2 des courbes C1 et C2 pour F=0, c'est-à-dire l'angle des courbes C1 et C2 à partir de l'axe des abscisses, ainsi que leur évolution.

Il s'agit encore de l'absence ou de l'existence d'un déplacement résiduel Dr de la courbe C2 pour F=0 et de l'importance de ce déplacement. On entend par là la distance entre le point O du graphe et le point de croisement de l'axe des abscisses par la courbe C2.

Ces paramètres ne sont pas limitatifs.

Certains de ces paramètres sont à considérer de façon absolue. Par exemple une forme est linéaire ou elle ne l'est pas. D'autres paramètres sont relatifs et à considérer par rapport à une situation dite « normale ». On entend par là la situation dans laquelle le système 1 de support à mât est parfaitement satisfaisant.

A l'effet de déterminer les paramètres qui viennent d'être mentionnés, le dispositif comprend des moyens de traitement communs en tout ou partie avec les moyens de traitement 23.

Puis, selon le procédé de l'invention, on interprète les paramètres pour en tirer une conclusion sur l'état du fût 6 et déterminer ses éventuelles pathologies, mais également pour en tirer une conclusion sur l'état du système 4 de montage du fût 6, à savoir sur l'état du massif de fondation 13, de la plaque d'appui 9, des éventuels goussets de rigidification 10, des tiges de scellement 12, des écrous 14 et éventuels contre écrous, et selon les réalisations et variante du système 4 de montage précédemment décrits, de l'éventuelle semelle semi rigide 19, des éventuels écrous 16 et rondelles associées 17, et de leurs liaisons respectives. Il s'agit par conséquent de déterminer les éventuelles pathologies des moyens constitutifs du système 4 de montage.

Cette interprétation peut être réalisée par l'opérateur au vu des courbes ou grâce en tout ou partie aux moyens de traitement que comporte le dispositif.

Le dispositif peut comporter des moyens informatiques et/ou automatiques pour effectuer tout ou partie des opérations précédemment indiquées.

Dans une réalisation, le dispositif comporte en outre des moyens de comparaison des courbes dites de chargement et de déchargement C1 et C2 avec des courbes théoriques correspondant à des pathologies déterminées.

Les moyens de traitement comprenant un ordinateur peuvent être combinés aux moyens 32 de visualisation et/ou aux moyens 33 d'impression pour visualiser les résultats du contrôle effectué.

Les moyens de traitement 31, les moyens 32 de visualisation et les moyens 33 d'impression peuvent être portés par l'engin automoteur précédemment mentionné.

On décrit maintenant une réalisation plus perfectionnée du procédé (avec quatre courbes).

Dans cette réalisation, après la deuxième étape, et avant que de déterminer et d'interpréter l'ensemble de paramètres, on réalise une troisième puis une quatrième étape.

Dans la troisième étape, on réitère les opérations de la première étape dans la direction x-x, mais dans le sens opposé, l'application de la force F1' causant une déviation latérale D1' du fût 6 du mât 3.

De manière analogue, on mesure la force F1' appliquée et la déviation D1' et on établit la fonction f1' de la force F1' en fonction de la déviation D1' ou sa courbe représentative C1', ', dite de chargement, sur un graphe Force F / Déviation D.

Dans la quatrième étape, on réitère les opérations de la deuxième étape dans la direction x-x mais dans le sens opposé au sens d'application de la force F1'.

Et, de manière analogue, on mesure la force F2' appliquée et la déviation D2' et on établit la fonction f2' de la force F2' en fonction de la déviation D2', respectivement sa courbe représentative C2', dite de déchargement.

On peut alors, dans une phase ultérieure, et à partir des courbes réalisées C'1 et C'2, déterminer les mêmes paramètres que pour les courbes C1 et C2.

On interprète alors les paramètres pour en tirer une conclusion supplémentaire en relation avec l'orientation, sur l'état du système 4 de montage du fût 6, à savoir sur l'état du massif de fondation 13, de la plaque d'appui 9, des éventuels goussets de rigidification 10, des tiges de scellement 12, des écrous 14 et éventuels contre écrous, et selon les réalisations et variante du système 4 de montage précédemment décrits, de l'éventuelle semelle semi rigide 19, des éventuels écrous 16 et rondelles associées 17, et de leurs liaisons respectives. Il s'agit par conséquent de déterminer les éventuelles pathologies des moyens constitutifs du système 4 de montage.

On décrit maintenant une réalisation encore plus perfectionnée du procédé (avec huit courbes).

Dans cette réalisation, après la quatrième étape précédemment exposée, et avant que de déterminer et d'interpréter l'ensemble de paramètres, on réalise une cinquième, une sixième, une septième et une huitième étape.

Dans la cinquième étape, on réitère les opérations de la première étape dans une direction y-y sensiblement perpendiculaire à la direction x-x, l'application de la force F1 causant une déviation latérale D1 du fût 6 du mât 3.

Comme précédemment, on mesure la force F1 appliquée et la déviation D1 et on établit la fonction f1 de la force F1 en fonction de la déviation D1 ou sa courbe représentative C1, dite de chargement, sur un graphe Force F / Déviation D.

Dans la sixième étape, on réitère les opérations de la deuxième étape dans la direction y-y mais dans le sens opposé au sens d'application de la force F1.

On mesure alors la force F2 appliquée et la déviation D2 et on établit la fonction f2 de la force F2 en fonction de la déviation D2, respectivement sa courbe représentative C2, dite de déchargement.

Dans la septième étape, on réitère les opérations de la cinquième étape dans la direction y-y mais dans le sens opposé, l'application de la force F1' causant une déviation latérale D1' du fût 6 du mât 3.

On mesure alors la force F1' appliquée et la déviation D1' et on établit la fonction f1' de la force F1' en fonction de la déviation D1' ou sa courbe représentative C1' sur un graphe Force F / Déviation D.

Enfin, dans une huitième étape, on réitère les opérations de la sixième étape dans la direction y-y mais dans le sens opposé, l'application de la force F2' causant une déviation latérale D2' du fût 6 du mât 3.

On mesure alors la force F2' appliquée et la déviation D2' et on établit la fonction f2' de la force F2' en fonction de la déviation D2' ou sa courbe représentative C2' sur un graphe Force F / Déviation D,

Une fois ces étapes faites, dans une phase ultérieure, à partir des courbes C1, C2, C'1 et C'2 réalisées dans la direction y-y, on détermine les mêmes paramètres que pour les courbes C1, C2, C1' et C2' réalisées dans la direction x-x.

On interprète alors les paramètres pour en tirer une conclusion supplémentaire en relation avec l'orientation, sur l'état du système 4 de montage du fût 6, à savoir sur l'état du massif de fondation 13, de la plaque d'appui 9, des éventuels goussets de rigidification 10, des tiges de scellement 12, des écrous 14 et éventuels contre écrous, et selon les réalisations et variante du système 4 de montage précédemment décrits, de l'éventuelle semelle semi rigide 19, des éventuels écrous 16 et rondelles associées 17, et de leurs liaisons respectives. Il s'agit par conséquent de déterminer les éventuelles pathologies des moyens constitutifs du système 4 de montage.

On décrit maintenant un certain nombre de pathologies types qui peuvent être déduites d'une paire de courbes C1, C2 ou C1', C2' des axes x-x ou y-y telles qu'elles ont été réalisées comme exposé précédemment, et a *fortiori* de quatre paires de courbes C1, C2 et C1', C2' des axes x-x et y-y. Cette description est faite en référence aux figures 7A à 7Q, les graphes étant plus explicites par eux-mêmes que toute description que l'on peut en faire. Pour éviter d'alourdir la description, on ne mentionne que les courbes C1 et C2, étant entendu que cela vaut également pour les courbes C1' et C2'.

Il est entendu que tout ce qui est exposé en relation avec une ou des courbes peut être transposé avec un autre mode de présentation équivalent, par exemple un ou des tableaux de chiffres. Le mot « courbe » ne doit donc pas être considéré comme limitatif.

On se réfère maintenant expressément au graphe de la figure 7A. On interprète la courbe de chargement C1 et la courbe de déchargement C2 quasi linéaires et parallèles et un très petit déplacement résiduel Dr plus comme signifiant que le système 1 de support à mât est normal, sans plasticité du matériau constitutif et sans désordre concernant le système 4 de montage. Les courbes C1 et C2 de chargement et de déchargement peuvent donc être qualifiées de normales ou de référence et c'est par rapport à ces courbes que sont appréciés et les écarts et évalués les désordres.

On se réfère maintenant expressément au graphe de la figure 7B. On interprète une courbe de chargement C1 et une courbe de déchargement C2 quasi linéaires et parallèles, qui pour F=0 ont des pentes α1 et a2 plus faibles que la normale et un déplacement résiduel Dr de moyen à grand par rapport à la normale, comme résultante d'un montage « sur écrous » engendrant une rigidité plus faible du système ou d'une pathologie d'un désordre concernant une tige de scellement 11 ou son écrou 14 de serrage.

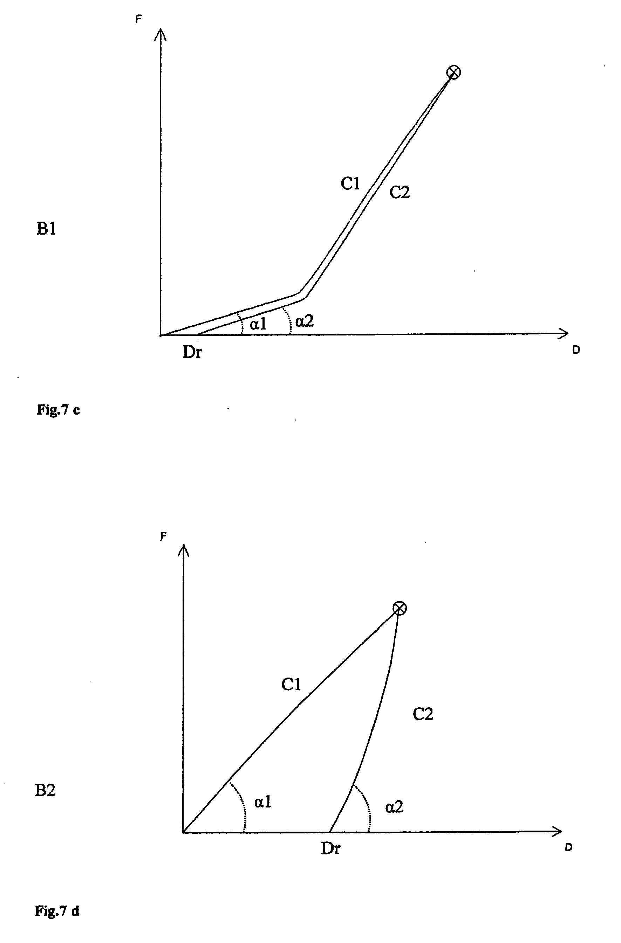

On se réfère maintenant expressément au graphe de la figure 7C. On interprète une courbe de chargement C1 qui pour F=0 a une pente α1 plus faible que la normale puis, rapidement, a une pente voisine de la normale, et une courbe de déchargement C2 proche de la courbe C1, comme la pathologie d'un écrou 14 de serrage desserré, ou d'un système 4 de montage présentant un jeu ou d'une plasticité au niveau de la porte 8.

On se réfère maintenant expressément au graphe de la figure 7D. On interprète une courbe de chargement C1 et une courbe de déchargement C2 linéaires mais pouvant montrer une légère courbure, présentant des pentes α1 et α2 nettement différentes pour F=0 et un déplacement résiduel Dr plus grand que la normale, comme la pathologie d'un désordre dans le massif de fondation 13 tel qu'un massif instable ou sous-dimensionné, ou bien encore d'un sol 5 présentant une pression trop faible.

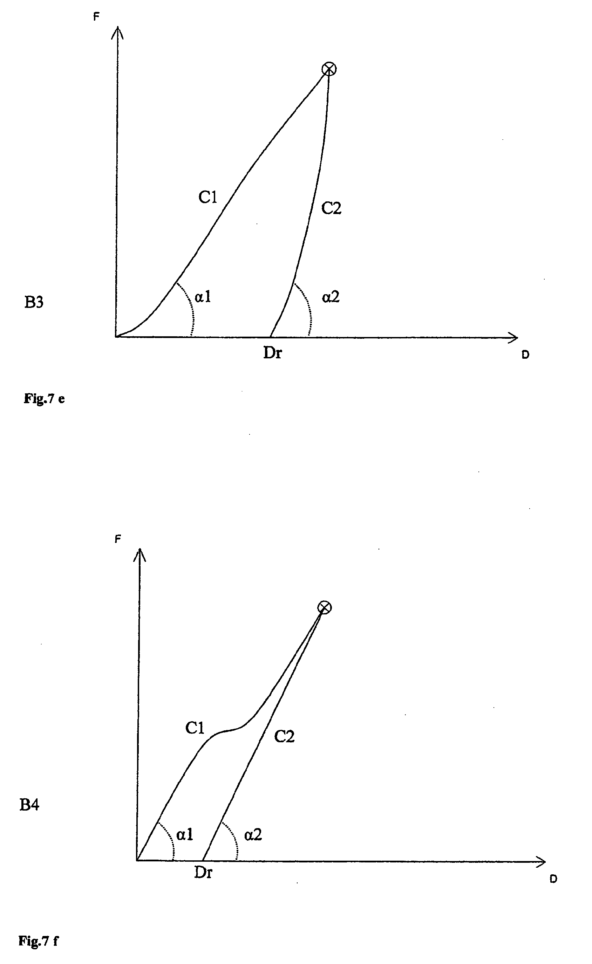

On se réfère maintenant expressément au graphe de la figure 7E. On interprète la courbe de chargement C1 qui pour F=0 a une pente α1 plus faible que la normale puis prend rapidement une pente plus proche de la normale et une courbe de déchargement C2 présentant des pentes α1 et a2 nettement différentes quelque soit F et un déplacement résiduel Dr plus grand que la normale, comme la pathologie d'un massif de fondation 13 instable avec un jeu entre le massif de fondation 13 et le sol 5 ou sous-dimensionné avec un jeu entre le massif de fondation 13 et le sol 5 ou d'un écrou 14 insuffisamment serré et un massif de fondation 13 instable.

On se réfère maintenant expressément au graphe de la figure 7F. On interprète une courbe de chargement C1 quasi linéaire avec point d'inflexion intermédiaire, une courbe de déchargement C2 quasi linéaire et parallèle aux tronçons linéaires de la courbe de chargement C1, et un déplacement résiduel Dr plus grand que la normale, comme la pathologie d'une tige de scellement 12 sortant du massif de fondation 13 et un fût 6 de mât 3 ne revenant pas dans sa position initiale.

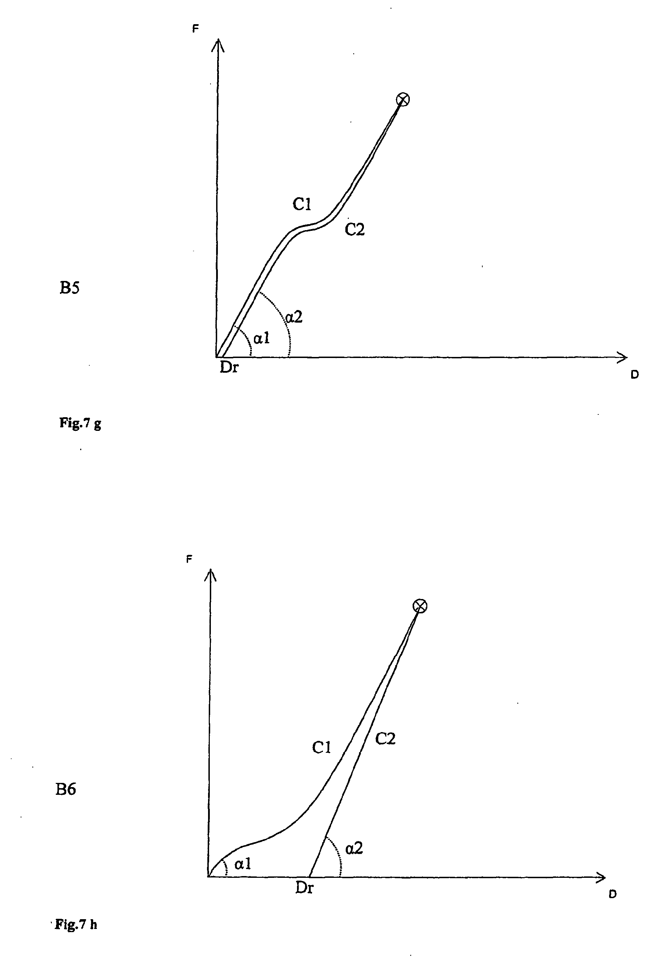

On se réfère maintenant expressément au graphe de la figure 7G. On interprète une courbe de chargement C1 quasi linéaire avec point d'inflexion intermédiaire, une courbe de déchargement C2 quasi linéaire avec point d'inflexion intermédiaire, pouvant être quasi parallèle à la courbe de chargement C1, comme la pathologie d'une tige de scellement 11 sortant du massif de fondation 13 et un fût 6 de mât 3 reprenant sa position initiale par la suite.

On se réfère maintenant expressément au graphe de la figure 7H. On interprète une courbe de chargement C1 qui, à partir de F=0 est non linéaire avec très rapidement une diminution de la pente α1, puis est quasi linéaire après avoir repris une pente normale, une courbe de déchargement C2 quasi linéaire et parallèle au tronçon linéaire de la première, et un déplacement résiduel Dr plus grand que la normale, comme la pathologie d'une tige de scellement 11 initialement sortie du massif de fondation 13 et y rentrant par la suite dans le cas d'un montage « sur écrous » ou un fût 6 de mât 3 initialement dévié par rapport à la normale, reprenant une position dite normale, typiquement en position verticale.

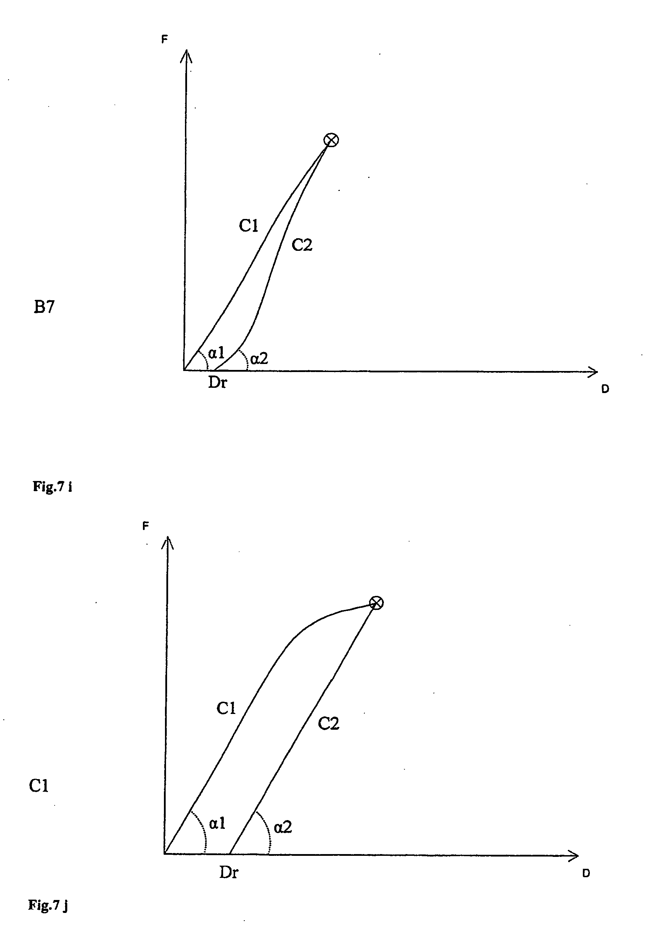

On se réfère maintenant expressément au graphe de la figure 7I. On interprète une courbe de chargement C1 relativement linéaire tout en pouvant présenter une légère courbure, une courbe de déchargement C2 présentant un arrondi important vers F=0, et un déplacement résiduel Dr de moyen à plus grand que la normale, comme la pathologie d'un écrou 14 insuffisamment serré ou manquant, avec un montage comportant une semelle semi rigide 19.

On se réfère maintenant expressément au graphe de la figure 7J. On interprète une courbe de chargement C1 quasi linéaire à partir de F=0, puis présentant une diminution importante de la pente α1, celle-ci restant positive, une courbe de déchargement C2 quasi linéaire et parallèle à C1 dans son tronçon linéaire, et un déplacement résiduel Dr de moyen à grand par rapport à la normale, comme la pathologie d'un écrouissage du matériau constitutif de la plaque d'appui 9, des tiges de scellement 11, des rondelles ou du fût 6 du mât 3 proprement dit en dessous de la zone 22 d'application des forces F1 et F2, ou encore une fissure en dessous de cette zone 22.

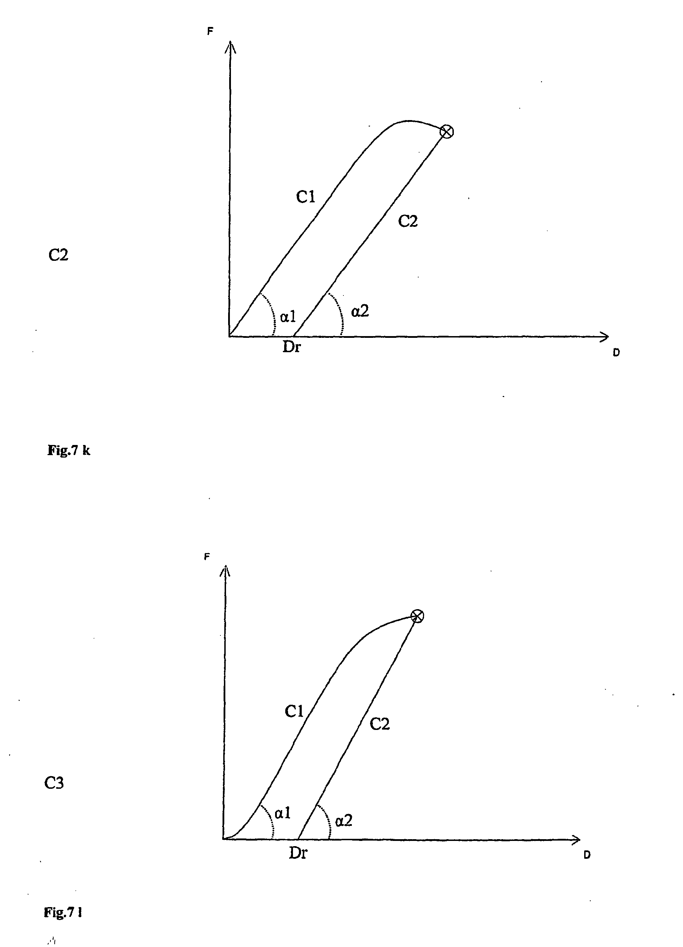

On se réfère maintenant expressément au graphe de la figure 7K. On interprète une courbe de chargement C1 quasi linéaire à partir de F=0, puis présentant une diminution importante de la pente α1, celle-ci devenant négative, une courbe de déchargement C2 quasi linéaire et parallèle à C1 dans son tronçon linéaire, et un déplacement résiduel Dr de moyen à grand par rapport à la normale, comme la pathologie d'une striction du matériau constitutif de la plaque d'appui 9, des tiges de scellement 11, du fût 6 du mât 3 proprement dit en dessous de la zone 22 d'application des forces F1 et F2, ou encore une fissure en dessous de cette zone 22.

On se réfère maintenant expressément au graphe de la figure 7L. On interprète une courbe de chargement C1 qui pour F=0 a une pente α1 plus faible que la normale puis reprend rapidement une pente α1 voisine de la normale, puis présente une diminution importante de la pente α1, celle-ci restant positive, une courbe de déchargement C2 quasi linéaire et parallèle à C1 dans son tronçon linéaire, et un déplacement résiduel Dr de moyen à grand par rapport à la normale, comme la pathologie d'un écrouissage du matériau constitutif de la plaque d'appui 9, des tiges de scellement 11, des rondelles, du fût 6 du mât 3 proprement dit en dessous de la zone 22 d'application des forces F1 et F2, ou encore une fissure en dessous de cette zone 22.

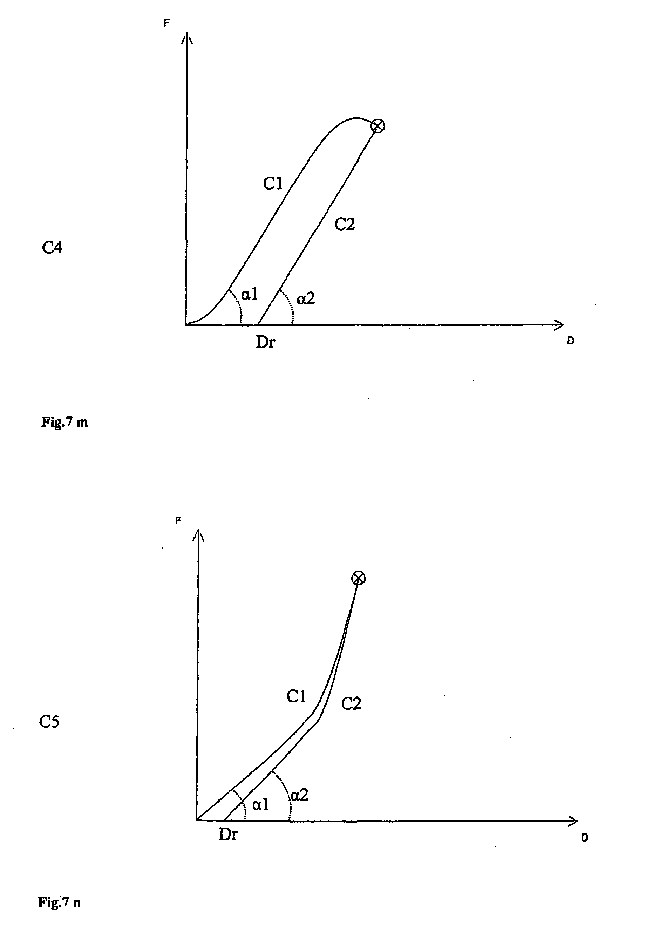

On se réfère maintenant expressément au graphe de la figure 7M. On interprète une courbe de chargement C1 qui pour F=0 a une pente α1 plus faible que la normale puis a une pente α1 voisine de la normale, puis présente une diminution importante de la pente α1, celle-ci devenant négative, une courbe de déchargement C2 quasi linéaire et parallèle à C1 dans son tronçon linéaire, et un déplacement résiduel Dr de moyen à grand par rapport à la normale, comme la pathologie d'une striction du matériau constitutif de la plaque d'appui 9, des tiges de scellement 11, du fût 6 du mât 3 proprement dit en dessous de la zone 22 d'application des forces F1 et F2, ou encore une fissure en dessous de cette zone 22.

On se réfère maintenant expressément au graphe de la figure 7N. On interprète une courbe de chargement C1 qui à partir de F=0 est quasi linéaire, puis bien après change de pente et a une pente supérieure, une courbe de déchargement C2 proche de la courbe C1, et un déplacement résiduel Dr de moyen à grand par rapport à la normale, comme la pathologie d'une plasticité du matériau entre la zone 22 d'application des forces F1 et F2 et la zone de mesure des déplacements D1 et D2, ou un écrou 14 de serrage desserré, ou une fissure.

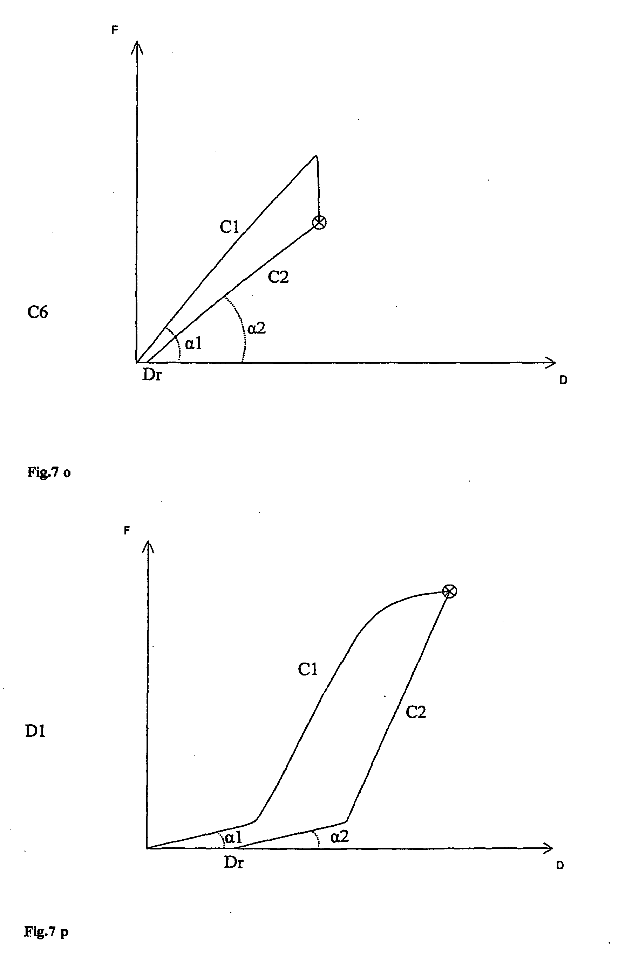

On se réfère maintenant expressément au graphe de la figure 7O. On interprète une courbe de chargement C1 relativement linéaire à partir de F=0, puis présentant une diminution très importante de la pente α1 avec déplacement D1 nul et diminution de la force F1, une courbe de déchargement C2 relativement linéaire avec une pente α2 différente de α1 et typiquement inférieure, et un déplacement résiduel Dr petit, comme la pathologie d'une zone de striction ou d'une fissure du matériau entre la zone 22 d'application des forces F1 et F2 et la zone 28 de mesure des déplacements D1 et D2.

On se réfère maintenant expressément au graphe de la figure 7P. On interprète une courbe de chargement C1 qui pour F=0 a une pente α1 plus faible que la normale puis, rapidement, a une pente α1 voisine de la normale, puis présente une diminution importante de la pente α1, celle-ci restant positive, et une courbe de déchargement C2 quasi parallèle à la courbe C1, pour ses deux premières parties, et qui pour F=0 a une pente α2 plus faible que la normale, voire nulle, comme la pathologie d'un écrou 14 desserré et d'une plasticité du matériau.

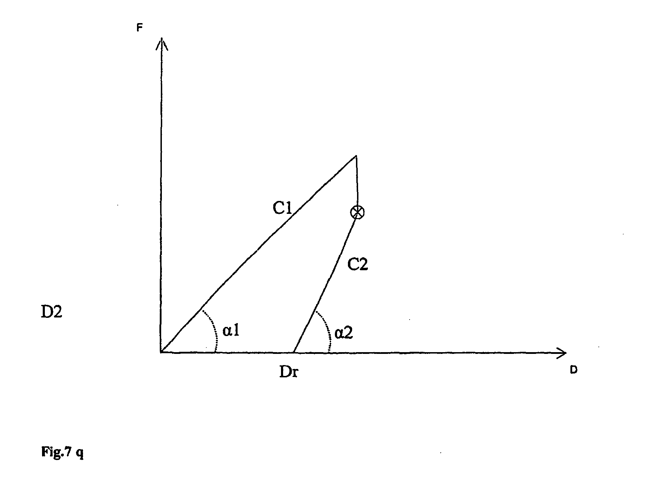

On se réfère maintenant expressément au graphe de la figure 7Q. On interprète une courbe de chargement C1 relativement linéaire à partir de F=0, puis présentant une diminution très importante de la pente α1 avec déplacement D1 quasi nul et diminution de la force F1, une courbe de déchargement C2 relativement linéaire avec une pente α2 différente de α1 et typiquement supérieur, et un déplacement résiduel Dr plus grand que la normale, comme la pathologie d'une zone de striction entre la zone 22 d'application des forces F1 et F2 et la zone 28 de mesure des déplacements D1 et D2, avec plasticité sous la zone de mesure des déplacements D1 et D2, notamment au niveau de la plaque d'appui.

## Revendications

1. Procédé de contrôle du comportement mécanique d'un système de support à mât comportant un fût (6) solidaire d'un massif de fondation (13), dans lequel :
• dans une première étape :
o on applique au fût (6), au dessus du massif de fondation (3), un effort sensiblement horizontal croissant F1, dans une direction x-x correspondant à l'intersection d'un plan axial de référence et d'un plan transversal, au plus jusqu'à atteindre une valeur de consigne prédéfinie ou lorsque souhaité, l'application de la dite force F1 causant une déviation latérale D1 du fût (6),
o on mesure la force F1 et la déviation D1 et on établit la fonction f1 de la force F1 en fonction de la déviation D1, respectivement sa courbe représentative C1, dite de chargement, sur un graphe Force F/ Déviation D,
• dans une deuxième étape :
o on applique au fut (6), un effort sensiblement horizontal décroissant F2, dans le même axe x-x que la force F1 mais dans le sens opposé,
o on mesure la force F2 et la déviation D2 et on établit la fonction f2 de la force F2 en fonction de la déviation D2 respectivement sa courbe représentative C2, dite de déchargement,
• dans une phase ultérieure,
o on détermine d'abord, à partir des courbes C1 et C2, un ensemble de paramètres:
➢ dans quelle mesure la courbe C1 et la courbe C2, respectivement, est en tout ou partie linéaire ou non, avec ou non point d'inflexion ou point de courbure, et en cas de changement de pente, l'importance de celui-ci,
➢ la disposition relative des deux courbes C1 et C2,
➢ les pentes α1 et α2 des courbes C1 et C2 pour F=0, ainsi que leur évolution,
➢ l'absence ou l'existence, et le cas échéant l'importance d'un déplacement résiduel Dr de la courbe C2 pour F=0,
o et on interprète les dits paramètres pour en tirer une conclusion sur l'état du fût (6) et déterminer ses éventuelles pathologies,
**caractérisé en ce que** :
• on sélectionne préalablement un système (1) de support à mât comportant un fût (6) non pas ancré directement dans le massif de fondation (13) mais solidaire, avec ou sans goussets de rigidification (10), d'une plaque d'appui (9) fixée sur le massif de fondation (13) par une pluralité de tiges de scellement (12), lesquelles sont ancrées dans le massif de fondation (13) et traversent une pluralité de lumières (11) de la plaque d'appui réparties autour du fût (6), des écrous (14) et - le cas échéant des contre écrous - étant vissés sur leurs parties saillantes au dessus de la plaque d'appui (9) et serrés sur sa face supérieure avec des rondelles associées (15), la plaque d'appui (9) reposant soit sur le massif de fondation (13) directement ou par l'intermédiaire d'une semelle supplémentaire semi rigide (19) présentant des trous de passage (20) pour des tiges de scellement (12) soit sur des écrous (16), avec des rondelles associées (17), préalablement vissés sur les tiges de scellement (12), le cas échéant, un bloc en béton (21), recouvrant l'ensemble de la plaque d'appui (9) et des tiges de scellement (11),
• on applique les opérations de la première étape et de la deuxième étape,
• on détermine l'ensemble des dits paramètres à partir des courbes C1 et C2,
• et on interprète les dits paramètres pour en tirer également une conclusion sur l'état du système de montage du fût (6), à savoir sur l'état du massif de fondation (3), de la plaque d'appui (9), des éventuels goussets de rigidification (10), des tiges de scellement (12), des écrous (14) et éventuels contre écrous, de l'éventuelle semelle semi rigide (19), des éventuels écrous (16) et rondelles associées (17), et de leurs liaisons respectives, et déterminer leurs éventuelles pathologies.

2. Procédé selon la revendication 1, **caractérisé en ce que** l'on interprète la courbe de chargement C1 et la courbe de déchargement C2 quasi linéaires et parallèles et un très petit déplacement résiduel Dr comme signifiant que le système 1 de support à mât est sans plasticité au niveau de matériau constitutif et sans désordre concernant le système 4 de montage, les courbes C1 et C2 de chargement et de déchargement étant qualifiées de normales ou de référence.

3. Procédé selon la revendication 1, **caractérisé en ce que** l'on interprète une courbe de chargement C1 et une courbe de déchargement C2 quasi linéaires et parallèles, qui pour F=0 ont des pentes α1 et α2 plus faibles que la normale et un déplacement résiduel Dr de moyen à grand par rapport à la normale, comme résultante d'un montage « sur écrous » engendrant une rigidité plus faible du système ou d'une pathologie d'un désordre concernant une tige de scellement (11) ou son écrou de serrage (14).

4. Procédé selon la revendication 1, **caractérisé en ce que** l'on interprète une courbe de chargement C1 qui pour F=0 a une pente α1 plus faible que la normale puis, rapidement, a une pente voisine de la normale, et une courbe de déchargement C2 proche de la courbe C1, comme la pathologie d'un écrou de serrage (14) desserré, ou d'un système (4) de montage présentant un jeu ou d'une plasticité au niveau de la porte (8).

5. Procédé selon la revendication 1, **caractérisé en ce que** l'on interprète une courbe de chargement C1 et une courbe de déchargement C2 linéaires mais pouvant montrer une légère courbure, présentant des pentes α1 et α2 nettement différentes pour F=0 et un déplacement résiduel Dr plus grand que la normale, comme la pathologie d'un désordre dans le massif de fondation (13) tel qu'un massif instable ou sous-dimensionné, ou bien encore d'un sol (5) présentant une pression trop faible.

6. Procédé selon la revendication 1, **caractérisé en ce que** l'on interprète la courbe de chargement C1 qui pour F=0 a une pente α1 plus faible que la normale puis prend rapidement une pente plus proche de la normale et une courbe de déchargement C2 présentant des pentes α1 et α2 nettement différentes quelque soit F et un déplacement résiduel Dr plus grand que la normale, comme la pathologie d'un massif de fondation (13) instable avec un jeu entre le massif de fondation (13) et le sol (5) ou sous-dimensionné avec un jeu entre le massif de fondation (13) et le sol (5) ou d'un écrou insuffisamment serré et un massif de fondation (13) instable.

7. Procédé selon la revendication 1, **caractérisé en ce que** l'on interprète une courbe de chargement C1 quasi linéaire avec point d'inflexion intermédiaire, une courbe de déchargement C2 quasi linéaire et parallèle aux tronçons linéaires de la courbe de chargement C1, et un déplacement résiduel Dr plus grand que la normale, comme la pathologie d'une tige de scellement (11) sortant du massif de fondation (13) et un fût (6) de mât (3) ne revenant pas dans sa position initiale.

8. Procédé selon la revendication 1, **caractérisé en ce que** l'on interprète une courbe de chargement C1 quasi linéaire avec point d'inflexion intermédiaire, une courbe de déchargement C2 quasi linéaire avec point d'inflexion intermédiaire, pouvant être quasi parallèle à la courbe de chargement C1, comme la pathologie d'une tige de scellement (11 ) sortant du massif de fondation (13) et un fût (6) de mât (3) revenant à sa position initiale par la suite.

9. Procédé selon la revendication 1, **caractérisé en ce que** l'on interprète une courbe de chargement C1 qui, à partir de F=0 est non linéaire avec très rapidement une diminution de la pente α1, puis est quasi linéaire après avoir repris une pente normale, une courbe de déchargement C2 quasi linéaire et parallèle au tronçon linéaire de la première, et un déplacement résiduel Dr plus grand que la normale, comme la pathologie d'une tige de scellement (11) initialement sortie du massif de fondation (13) et y rentrant par la suite dans le cas d'un montage « sur écrous » ou un fût (6) de mât (3) initialement dévié par rapport à la normale, reprenant une position dite normale, typiquement en position verticale.

10. Procédé selon la revendication 1, **caractérisé en ce que** l'on interprète une courbe de chargement C1 relativement linéaire tout en pouvant présenter une légère courbure, une courbe de déchargement C2 présentant un arrondi important vers F=0, et un déplacement résiduel Dr de moyen à plus grand que la normale, comme la pathologie d'un écrou (14) insuffisamment serré ou manquant, avec un montage « sur semelle semi rigide ».

11. Procédé selon la revendication 1, **caractérisé en ce que** l'on interprète une courbe de chargement C1 quasi linéaire à partir de F=0, puis présentant une diminution importante de la pente α1, celle-ci restant positive, une courbe de déchargement C2 quasi linéaire et parallèle à C1 dans son tronçon linéaire, et un déplacement résiduel Dr de moyen à grand par rapport à la normale, comme la pathologie d'un écrouissage du matériau constitutif de la plaque d'appui (9), des tiges de scellement (11 ), des rondelles ou du fût (6) du mât (3) proprement dit en dessous de la zone (22) d'application des forces F1 et F2, ou encore une fissure en dessous de cette zone (22).

12. Procédé selon la revendication 1, **caractérisé en ce que** l'on interprète une courbe de chargement C1 quasi linéaire à partir de F=0, puis présentant une diminution importante de la pente α1, celle-ci devenant négative, une courbe de déchargement C2 quasi linéaire et parallèle à C1 dans son tronçon linéaire, et un déplacement résiduel Dr de moyen à grand par rapport à la normale, comme la pathologie d'une striction du matériau constitutif de la plaque d'appui (9), des tiges de scellement (11), du fût (6) du mât (3) proprement dit en dessous de la zone (22) d'application des forces F1 et F2, ou encore une fissure en dessous de cette zone (22).

13. Procédé selon la revendication 1, **caractérisé en ce que** l'on interprète une courbe de chargement C1 qui pour F=0 a une pente α1 plus faible que la normale puis reprend rapidement une pente α1 voisine de la normale, puis présente une diminution importante de la pente α1, celle-ci restant positive, une courbe de déchargement C2 quasi linéaire et parallèle à C1 dans son tronçon linéaire, et un déplacement résiduel Dr de moyen à grand par rapport à la normale, comme la pathologie d'un écrouissage du matériau constitutif de la plaque d'appui (9), des tiges de scellement (11), des rondelles, du fût (6) du mât (3) proprement dit en dessous de la zone (22) d'application des forces F1 et F2, ou encore une fissure en dessous de cette zone (22).

14. Procédé selon la revendication 1, **caractérisé en ce que** l'on interprète une courbe de chargement C1 qui pour F=0 a une pente α1 plus faible que la normale puis a une pente α1 voisine de la normale, puis présente une diminution importante de la pente α1, celle-ci devenant négative, une courbe de déchargement C2 quasi linéaire et parallèle à C1 dans son tronçon linéaire, et un déplacement résiduel Dr de moyen à grand par rapport à la normale, comme la pathologie d'une striction du matériau constitutif de la plaque d'appui (9), des tiges de scellement (11), du fût (6) du mât (3) proprement dit en dessous de la zone (22) d'application des forces F1 et F2, ou encore une fissure en dessous de cette zone (22).

15. Procédé selon la revendication 1, **caractérisé en ce que** l'on interprète une courbe de chargement C1 qui à partir de F=0 est quasi linéaire, puis bien après change de pente et a une pente supérieure, une courbe de déchargement C2 proche de la courbe C1, et un déplacement résiduel Dr de moyen à grand par rapport à la normale, comme la pathologie d'une plasticité du matériau entre la zone (22) d'application des forces F1 et F2 et la zone (28) de mesure des déplacements D1 et D2, ou un écrou de serrage (14) desserré, ou une fissure.

16. Procédé selon la revendication 1, **caractérisé en ce que** l'on interprète une courbe de chargement C1 relativement linéaire à partir de F=0, puis présentant une diminution très importante de la pente α1 avec déplacement D1 nul et diminution de la force F1, une courbe de déchargement C2 relativement linéaire avec une pente α2 différente de α1 et typiquement inférieure, et un déplacement résiduel Dr petit, comme la pathologie d'une zone de striction ou d'une fissure du matériau entre la zone (22) d'application des forces F1 et F2 et la zone (28) de mesure des déplacements D1 et D2.

17. Procédé selon la revendication 1, **caractérisé en ce que** l'on on interprète une courbe de chargement C1 qui pour F=0 a une pente α1 plus faible que la normale puis, rapidement, a une pente α1 voisine de la normale, puis présente une diminution importante de la pente α1, celle-ci restant positive, et une courbe de déchargement C2 quasi parallèle à la courbe C1, pour ses deux premières parties, et qui pour F=0 a une pente α2 plus faible que la normale, voire nulle, comme la pathologie d'un écrou (14) desserré et d'une plasticité du matériau.

18. Procédé selon la revendication 1, **caractérisé en ce que** l'on interprète une courbe de chargement C1 relativement linéaire à partir de F=0, puis présentant une diminution très importante de la pente α1 avec déplacement D1 quasi nul et diminution de la force F1, une courbe de déchargement C2 relativement linéaire avec une pente α2 différente de α1 et typiquement supérieure, et un déplacement résiduel Dr plus grand que la normale, comme la pathologie d'une zone de striction entre la zone (22) d'application des forces F1 et F2 et la zone (28) de mesure des déplacements D1 et D2, avec plasticité sous la zone (28) de mesure des déplacements D1 et D2, notamment au niveau de la plaque d'appui (8).

19. Procédé selon l'une quelconque des revendications 1 à 18, **caractérisé par le fait que**, après la deuxième étape :
• dans une troisième étape,
○ on réitère les opérations de la première étape dans la direction x-x, mais dans le sens opposé, l'application de la force F1' causant une déviation latérale D1' du fût (6),
○ on mesure la force F1' appliquée et la déviation D1' et on établit la fonction f1' de la force F1' en fonction de la déviation D1' ou sa courbe représentative C1', dite de chargement, sur un graphe Force F / Déviation D,
• dans une quatrième étape,
○ on réitère les opérations de la deuxième étape dans la direction x-x mais dans le sens opposé au sens d'application de la force F1',
○ on mesure la force F2' appliquée et la déviation D2' et on établit la fonction f2' de la force F2' en fonction de la déviation D2', respectivement sa courbe représentative C2', dite de déchargement, sur un graphe Force F / Déviation D,
• dans une phase ultérieure, à partir des courbes réalisées C'1 et C'2, on détermine les mêmes paramètres que pour les courbes C1 et C2,
• puis, on interprète les dits paramètres pour en tirer une conclusion supplémentaire en relation avec l'orientation, sur l'état du système de montage du fût (6), à savoir sur l'état du massif de fondation (3), de la plaque d'appui (9), des éventuels goussets de rigidification (10), des tiges de scellement (12), des écrous (14) et éventuels contre écrous, de l'éventuelle semelle semi rigide (19), des éventuels écrous (16) et rondelles associées (17), et de leurs liaisons respectives, et déterminer leurs éventuelles pathologies.

20. Procédé selon la revendication 19, **caractérisé par le fait que**, après la quatrième étape :
• dans une cinquième étape,
○ on réitère les opérations de la première étape dans une direction y-y sensiblement perpendiculaire à la direction x-x, l'application de la force F1 causant une déviation latérale D1 du mât,
○ on mesure la force F1 appliquée et la déviation D1 et on établit la fonction f1 de la force F1 en fonction de la déviation D1 ou sa courbe représentative C1, dite de chargement, sur un graphe Force F / Déviation D,
• dans une sixième étape,
○ on réitère les opérations de la deuxième étape dans la direction y-y mais dans le sens opposé au sens d'application de la force F1,
○ on mesure la force F2 appliquée et la déviation D2 et on établit la fonction f2 de la force F2 en fonction de la déviation D2, respectivement sa courbe représentative C2, dite de déchargement, sur un graphe Force F / Déviation D,
• dans une septième étape,
○ on réitère les opérations de la cinquième étape dans la direction y-y mais dans le sens opposé, l'application de la force F1' causant une déviation latérale D1' du mât,
○ on mesure la force F1' appliquée et la déviation D1' et on établit la fonction f1' de la force F1' en fonction de la déviation D1' ou sa courbe représentative C1', dite de chargement, sur un graphe Force F / Déviation D,
• dans une huitième étape,
○ on réitère les opérations de la sixième étape dans la direction y-y mais dans le sens opposé, l'application de la force F2' causant une déviation latérale D2' du mât,
○ on mesure la force F2' appliquée et la déviation D2' et on établit la fonction f2' de la force F2' en fonction de la déviation D2' ou sa courbe représentative C2', dite de déchargement, sur un graphe Force F / Déviation D,
• dans une phase ultérieure, à partir des courbes C1, C2, C'1 et C'2 réalisées dans la direction y-y, on détermine les mêmes paramètres que pour les courbes C1, C2, C1' et C2' réalisées dans la direction x-x,
• puis, on interprète les dits paramètres pour en tirer une conclusion supplémentaire en relation avec l'orientation, sur l'état du système de montage du fût (6), à savoir sur l'état du massif de fondation (3), de la plaque d'appui (9), des éventuels goussets de rigidification (10), des tiges de scellement (12), des écrous (14) et éventuels contre écrous, de l'éventuelle semelle semi rigide (19), des éventuels écrous (16) et rondelles associées (17), et de leurs liaisons respectives, et déterminer leurs éventuelles pathologies..

21. Procédé selon l'une quelconque des revendications 1 à 20, **caractérisé par le fait que** la direction x-x est sensiblement perpendiculaire au plan de la porte (8) du système (1) de support à mât.

22. Procédé selon l'une quelconque des revendications 1 à 21, **caractérisé par le fait que** la direction x-x est sensiblement orientée à 45° par rapport au plan de la porte (8) du système (1) de support à mât.

23. Dispositif pour la mise en oeuvre du procédé selon l'une quelconque des revendications 1 à 22, qui comporte :
• des moyens pour appliquer au fût (6) du mât (3), au dessus du massif de fondation (13) et de la plaque d'appui (9) et dans une zone (22) d'application de force, un effort sensiblement horizontal croissant puis décroissant,
• des moyens de mesure de la force appliquée au fût (6) du mât dans une zone (27) de mesure de forces,
• des moyens de mesure de la déviation du fût (6) du mât causée par les forces appliquées,
• des moyens de traitement aptes à établir la fonction f de la force F appliquée dans une direction et un sens donnés en fonction de la déviation D, respectivement sa courbe représentative de chargement ou de déchargement sur un graphe Force F / Déviation D,
• des moyens de traitement aptes à déterminer à partir des courbes l'ensemble des paramètres nécessaires au contrôle, de manière à permettre leur interprétation pour en tirer une conclusion sur l'état du fût (6) et l'état du système de montage du fût (6), à savoir sur l'état du massif de fondation (3), de la plaque d'appui (9), des éventuels goussets de rigidification (10), des tiges de scellement (12), des écrous (14) et éventuels contre écrous, de l'éventuelle semelle semi rigide (19), des éventuels écrous (16) et rondelles associées (17), et de leurs liaisons respectives, et déterminer leurs éventuelles pathologies.

24. Dispositif selon la revendication 23, **caractérisé par le fait qu'**il comporte en outre des moyens de visualisation et/ou d'impression des courbes de chargement et de déchargement.

25. Dispositif selon l'une quelconque des revendications 23 et 24, **caractérisé par le fait qu'**il comporte en outre des moyens de comparaison des courbes de chargement et de déchargement avec des courbes théoriques correspondant à des pathologies déterminées.

## Claims

1. A method for controlling the mechanical behaviour of a mast support system including a body (6) integral with a foundation block (13), wherein:
* during a first step:
O an increasing substantially horizontal stress F1 is applied to the body (6), above the foundation block (3), in an x-x direction corresponding to the intersection of a reference axial plane and a transversal plane, which can reach a predefined set value, or whenever so desired, the application of said force F1 causing a lateral deviation D1 of the body (6) ,
O the force F1 and the deviation D1 are measured, and the function f1 of the force F1 is determined as a function of the deviation D1, respectively the representative curve C1 thereof, also called the loading curve, on a Force F/Deviation D graph,
* during a second step:
O a decreasing substantially horizontal stress F2 is applied to the body (6), along the same x-x axis as force F1, but in the opposite direction,
O the Force F2 and the deviation D2 are measured and the function f2 of the force F2 is determined as a function of the deviation D2, respectively the representative curve C2 thereof, also called the unloading curve,
* during a subsequent step,
O a set of parameters are first determined from curves C1 and C2:
➢ to what extent the curve C1 and the curve C2, respectively, is totally or partially linear or not, with or without a point of inflexion or a point of curvature, and if the slope changes, how much?
➢ the relative arrangement of the two curves C1 and C2,
➢ the slopes α1 and α2 of the curves C1 and C2 for F=0 and the evolution thereof,
➢ the absence or the existence, and if so, the magnitude of a residual motion Dr of the curve C2 for F=0,
O said parameters are interpreted in order to draw a conclusion on the condition of the body (6) and to determine the pathologies thereof, if any,
**characterized in that**:
* a mast support system (1) is selected beforehand, which includes a body (6) which is not directly anchored into the foundation block (13) but is integral therewith, with or without strengthening gussets (10), a bearing plate (9) fixed on the foundation block (13) by means of a plurality of foundation bolts (12), which are anchored into the foundation block (13) and go through a plurality of openings (11) of the bearing plate distributed around the body (6), nuts (14) and, if need be locknuts - being screwed onto the protruding parts thereof above the bearing plate (9) and tightened on the upper face thereof with associated washers (15), the bearing plate (9) resting either directly on the foundation block (13) or through an additional semi-rigid sole (19) having holes (20) for foundation bolts (12) or on nuts (16), with associated washers (17), previously screwed on the foundation bolts (12), if need be, a concrete block (21) covering the bearing plate (9) and foundation bolts (11) assembly.
* the operations of the first step and of the second steps are applied,
* the set of said parameters are determined from the curves C1 and C2,
* and said parameters are interpreted in order to also draw a conclusion on the condition of the body (6) mounting system, i.e. on the condition of the foundation block (3), of the bearing plate (9), the strengthening gussets (10) if any, the foundation bolts (12), the nuts (14) and the locknuts, if any, of the semi-rigid sole (19), if any, the nuts (16) if any and associated washers (17), and the respective connexions thereof, and determining the pathologies thereof, if any.

2. A method according to claim 1, **characterized in that** are interpreted the loading curve C1 and the unloading curve C2 which are almost linear and parallel and a very small residual motion Dr, as meaning that the mast support system (1) has no plasticity as regards the composing material and no structural damage as regards the mounting system (4), with the loading and unloading curves C1 and C2 being called normal or reference curves.

3. A method according to claim 1, **characterized in that** are interpreted a loading curve C1 and an unloading curve C2 which are almost linear and parallel and which, for F=0 show slopes α1 and α2 under normal and a residual motion Dr which is mean to large with respect to normal, as resulting from a mounting "with nuts", resulting in a weaker stiffness of the system or a pathology of a structural damage as regards a foundation bolt (11) or the clamping nut (14) thereof.

4. A method according to claim 1, **characterized in that** are interpreted a loading curve C1 which, for F=0, shows a slope α1 under normal, then quickly shows a slope close to normal, and an unloading curve C2 close to the curve C1, such as the pathology of a loose clamping nut (14) or a mounting system (4) showing clearance or resilience at the door (8).

5. A method according to claim 1, **characterized in that** are interpreted a loading curve C1 and an unloading curve C2 which are linear but can show a slight curvature, having clearly different slopes α1 and α2 for F=0 and a residual motion Dr which is above normal, such as the pathology of a structural damage in the foundation block (13) such as an unstable or undersized foundation block, or a floor (5) having too low pressure.

6. A method according to claim 1, **characterized in that** are interpreted the loading curve C1 which, for F=0 has a slope α1 under normal, then quickly shows a slope closer to normal and an unloading curve C2 showing clearly different slopes α1 and α2 whatever F and a residual motion Dr above normal, such as the pathology of an unstable foundation block (13), with a clearance between the foundation block (13) and the floor (5) or an insufficiently tightened nut and an unstable foundation block (13).

7. A method according to claim 1, **characterized in that** are interpreted an almost linear loading curve C1 with an intermediate point of inflexion, an unloading curve C2 which is almost linear and parallel to the linear segments of the loading curve C1, and a residual motion Dr above normal, such as the pathology of a foundation bolt (11), going out of the foundation block and a body (6) of a mast (3) which does not go back to its initial position.

8. A method according to claim 1, **characterized in that** are interpreted an almost linear loading curve C1 with an intermediate point of inflexion, an almost linear unloading curve C2 with an intermediate point of inflexion which can be almost parallel to the loading curve C1, such as the pathology of a foundation bolt (11), going out of the foundation block (13) and a body (6) of a mast (3) subsequently going back to its initial position.

9. A method according to claim 1, **characterized in that** are interpreted a loading curve C1 which, from F=0 on, is not linear, with very quickly a reduction in the slope α1, then is almost linear after having returned to a normal slope, an unloading curve C2 which is almost linear and parallel to the linear segment of the first one, and a residual motion Dr which is above normal, such as the pathology of a foundation bolt (11), initially going out of the foundation block (13) and going back in afterwards in the case of a mounting "with nuts" or a body (6) of a mast (3) initially deviated with respect to normal, going back to a so-called normal position, typically in a vertical position.

10. A method according to claim 1, **characterized in that** are interpreted a loading curve C1, which is relatively linear although being slightly bent, an unloading curve C2 showing a significant rounding towards F=0, and a residual motion Dr, from mean to above normal, such as the pathology of an insufficiently tightened or missing nut (14), with a mounting "on a semi-rigid sole".

11. A method according to claim 1, **characterized in that** are interpreted a loading curve C1, which is almost linear from F=0 on, then showing a significant reduction in the slope α1, which remains positive, an unloading curve C2 which is almost linear and parallel to C1 as for the linear segment thereof, and a residual motion Dr, from mean to large with respect to normal, such as the pathology of the work-hardening of the material composing the bearing plate (9), the foundation bolts (11), the washers or the body (6) of the mast (3) proper under the area (22) where the forces F1 and F2 are applied, or a crack under this area (22).

12. A method according to claim 1, **characterized in that** are interpreted a loading curve C1, which is almost linear from F=0 on, then showing a significant reduction in the slope α1, which becomes negative, an unloading curve C2 which is almost linear and parallel to C1 as for the linear segment thereof, and a residual motion Dr, from mean to large with respect to normal, such as the pathology of a necking of the material composing the bearing plate (9), the foundation bolts (11), the body (6) of the mast (3) proper under the area (22) where the forces F1 and F2 are applied, or a crack under this area (22).

13. A method according to claim 1, **characterized in that** are interpreted a loading curve C1, which for F=0 has a slope α1 which is under normal, then rapidly has a slope α1 close to normal, then shows a significant decrease in the slope α1, which remains positive, an unloading curve C2 which is almost linear and parallel to C1 as for the linear segment thereof, and a residual motion Dr, which can be mean to large with respect to normal, such as the pathology of the work-hardening of the material composing the bearing plate (9), the foundation bolts (11), the washers, the body (6) of the mast (3) proper under the area (22) where the forces F1 and F2 are applied, or a crack under this area (22).

14. A method according to claim 1, **characterized in that** a loading curve C1 is interpreted, which for F=0 has a slope α1 which is under normal, then has a slope α1 close to normal, then shows a significant decrease in the slope α1, which becomes negative, an unloading curve C2 which is almost linear and parallel to C1 as for the linear segment thereof, and a residual motion Dr, which can be mean to large with respect to normal, such as the pathology of necking of the material constituting the bearing plate (9), foundation bolts (11), the body (6) of the mast (3) proper under the area (22) where the forces F1 and F2 are applied, or a crack under this area (22).

15. A method according to claim 1, **characterized in that** a loading curve C1 is interpreted which, from F=0 on is almost linear, then changes slope and shows a more slanting slope, an unloading curve C2 close to the curve C1, and a residual motion Dr from mean to large with respect to normal, such as the pathology of a resilience of the material between the area (22) where the forces F1 and F2 are applied, and the area (28) where the motions D1 and D2 are measured, or a loose nut (14), or a crack.

16. A method according to claim 1, **characterized in that** a loading curve C1 is interpreted, which is relatively linear from F=0 on, then shows a very significant reduction in the slope α1 with a motion D1 which is null and a reduction in the force F1, an unloading curve C2 which is relatively linear with a slope α2 different from α1 and typically under it, and a small residual motion Dr, such as the pathology of a necking area or a crack in the material between the area (22) where the forces F1 and F2 are applied and the area (28) where the motions D1 and D2 are measured.

17. A method according to claim 1, **characterized in that** a loading curve C1 is interpreted which for F=0 has a slope α1 which is under normal then rapidly shows a slope α1 close to normal, then shows an important decrease in the slope α1, which remains positive, and an unloading curve C2 which is almost parallel to the curve C1, as for the first two parts thereof, and which, for F=0 shows a slope α2 under normal, or even null, such as the pathology of a loose nut (14) and a resilience of the material.

18. A method according to claim 1, **characterized in that** a loading curve C1 is interpreted which is relatively linear from F=0 on, then showing a very significant reduction in the slope α1 with a motion D1 which is almost null and reduction in the force F1, an unloading curve C2 which is relatively linear with a slope α2 which is different from slope α1 and typically above, and a residual motion Dr which is above normal, such as the pathology of an area of necking between the area (22) where the forces F1 and F2 are applied and the area (28) where the motions D1 and D2 are measured, with a resilience under the motions D1 and D2 motions measuring area (28), more particularly at the bearing plate (8).

19. A method according to any one of claims 1 to 18, **characterised in that**, after the second step:
* during a third step,
O the operations of the first step are repeated along the x-x axis but in the opposite direction, with the application of the force F1' causing a lateral deviation D1' of the body (6),
O the applied force F1' and the deviation D1' are measured and the function f1' of the force F1' is determined as a function of the deviation D1' or the representative curve C1' thereof, also called the loading curve, on a Force F/Deviation D graph,
* during a fourth step,
O the operations of the second step are repeated along the same x-x axis, but in the direction opposite the direction of application of the force F1',
O the applied force F2' and the deviation D2' are measured and the function f2' of the force F2' is determined as a function of the deviation D2', respectively the representative curve C2' thereof, also called the unloading curve, on a Force F/Deviation D graph,
* during a subsequent phase, from the drawn curves C'1 and C'2, the same parameters are determined as for curves C1 and C2,
* then, said parameters are interpreted to draw an additional conclusion relating to the orientation, the condition of the body (6) mounting system, i.e. the condition of the foundation block (3), the bearing plate (9), the strengthening gussets (10) if any, the foundation bolts (12), the nuts (14) and the locknuts, if any, of the semi-rigid sole (19), if any, the nuts (16) if any and associated washers (17), and the respective connexions thereof, and determining the pathologies thereof, if any.

20. A method according to claim 19, **characterised in that**, after the fourth step:
* during a fifth step,
O the operations of the first step are repeated in the y-y direction substantially perpendicular to the x-x direction, with the application of the force F1 causing a lateral deviation D1 of the mast,
O the applied force F1 and the deviation D1 are measured and the function f1 of the force F1 is determined as a function of the deviation D1 or the representative curve C1 thereof, also called the loading curve, on a Force F/Deviation D graph,
* during a sixth step,
O the operations of the second step are repeated in the y-y direction but in the direction opposite the direction of application of the force F1,
O the applied force F2 and the deviation D2 are measured and the function f2 of the force F2 is determined as a function of the deviation D2 or the representative curve C2 thereof, also called the unloading curve, on a Force F/Deviation D graph,
* during a seventh step,
O the operations of the fifth step are repeated along the axis y-y but in the opposite direction, with the application of the force F1' causing a lateral deviation D1' of the mast,
O the applied force F1' and the deviation D1' are measured and the function f1' of the force F1' is determined as a function of the deviation D1' or the representative curve C1' thereof, also called the loading curve, on a Force F/Deviation D graph,
* during an eighth step,
O the operations of the sixth step are repeated along the axis y-y but in the opposite direction, with the application of the force F2' causing a lateral deviation D2' of the mast,
O the applied force F2' and the deviation D2' are measured and the function f2' of the force F2' is determined as a function of the deviation D2' or the representative curve C2' thereof, also called the unloading curve, on a Force F/Deviation D graph,
* during a subsequent phase, from the curves C1, C2, C'1 and C'2 drawn in the y-y direction, the same parameters are determined as for curves C1, C2, C'1 and C'2 drawn in the x-x direction,
* then, said parameters are interpreted to draw an additional conclusion relating to the orientation, the condition of the body (6) mounting system, i.e. the condition of the foundation block (3), the bearing plate (9), the strengthening gussets (10) if any, the foundation bolts (12), the nuts (14) and the locknuts, if any, of the semi-rigid sole (19), if any, the nuts (16) if any and associated washers (17), and the respective connexions thereof, and determining the pathologies thereof, if any.

21. A method according to any one of claims 1 to 20, **characterized in that** the x-x direction is substantially perpendicular to the plane of the door (8) of a mast support system (1).

22. A method according to any one of claims 1 to 21, **characterized in that** the x-x direction is substantially oriented at 45° with respect to the plane of the door (8) of a mast support system (1).

23. A device for implementing the method according to any one of claims 1 to 22, which includes:
* means for applying a substantially horizontal increasing, then decreasing stress onto the body (6) of the mast (3), above the foundation block (13) and the bearing plate (9) and in a force application area (22),
* means for measuring the force applied to the body (6) of the mast in a force measuring area (27),
* means for measuring the deviation of the body (6) of the mast caused by the applied forces,
* processing means able to determine the function f of the force F applied in a given direction according to the deviation D, respectively the representative loading or unloading curve thereof on a Force F / Deviation D graph,
* processing means able to determine, from the curves, all the parameters required for the control so as to enable the interpretation thereof in order to draw a conclusion on the condition of the body (6) and the condition of the system for mounting the body (6), i.e. on the condition of the foundation block (3), the bearing plate (9), strengthening gussets (10) if any, foundation bolts (12), nuts (14) and locknuts, if any, of the semi-rigid sole (19), if any, nuts (16) if any and associated washers (17), and the respective connexions thereof, and determining the pathologies thereof, if any.

24. A device according to claim 23, **characterized in that** it further includes means for visualizing and/or printing loading and unloading curves.

25. A device according to any one of claims 23 and 24, **characterized in that** it further includes means for comparing loading and unloading curves with theoretical curves corresponding to determined pathologies.

## Patentansprüche

1. Verfahren für die Prüfung des mechanischen Verhaltens eines Mastträgersystems bestehend aus einem Schaft (6), der Bestandteil ist eines Fundamentblocks (13), bei dem man:
. in einem ersten Schritt:
- den Schaft (6) über dem Fundamentblock (3) mit einer zunehmenden etwa horizontalen Kraft F1 beaufschlagt, in einer Richtung x-x, die der Verschneidung einer axialen Bezugsebene und einer Querebene entspricht, bis höchstens ein vorbestimmter Sollwert erreicht ist oder, auf Wunsch, Anwendung der genannten Kraft F1, die eine seitliche Abweichung D1 des Schafts verursacht,
- die Kraft F1 und die Abweichung D1 misst und die Funktion f1 der Kraft F1 entsprechend der Abweichung D1 etabliert, bzw. ihre repräsentative Kurve C1, die so genannte Belastungskurve, auf einem Graph Kraft F / Abweichung D,
. in einem zweiten Schritt:
- den Schaft (6) mit einer abnehmenden etwa horizontalen Kraft F2 beaufschlagt, in derselben Achse x-x wie die Kraft F1, jedoch in die entgegen gesetzte Richtung,
- die Kraft F2 und die Abweichung D2 misst und die Funktion f2 der Kraft F2 entsprechend der Abweichung D2 etabliert, bzw. ihre repräsentative Kurve C2, die so genannte Entlastungskurve,
. in einer späteren Phase:
- zunächst ab den Kurven C1 und C2 eine Reihe von Parametern bestimmt:
➢ inwieweit die jeweilige Kurve C1 und C2 ganz oder teilweise linear ist oder nicht, mit oder ohne Einknickpunkt oder Krümmungspunkt, und im Fall von Neigungswechsel, dessen Größe,
➢ die relative Anordnung der beiden Kurven C1 und C2,
➢ die Neigungen α1 und α2 der Kurven C1 und C2 für F=0, sowie ihre Entwicklung,
➢ das Vorhandensein oder die Abwesenheit und gegebenenfalls die Größe einer Restverschiebung Dr der Kurve C2 für F=0,
- und man die genannten Parameter auslegt, um daraus auf den Zustand des Schafts (6) zu schließen und seine eventuellen Pathologien zu bestimmen,
**dadurch gekennzeichnet, dass**:
. man vorher ein Mastträgersystem (1) auswählt, das einen Schaft (6) umfasst, der nicht direkt im Fundamentblock (13) verankert ist, sondern mit oder ohne Versteifungsstücke (10) Bestandteil ist einer Stützplatte (9), die auf dem Fundamentblock (13) mit einer Vielzahl von Versiegelungsstangen (12) befestigt ist, die ihrerseits im Fundamentblock (13) verankert sind und durch eine Vielzahl von um den Schaft (6) herum verteilten Aussparungen (11) der Stützplatte verlaufen, wobei Muttern (14) und - gegebenenfalls Gegenmuttern - an ihrem über die Stützplatte (9) ragenden Teil verschraubt und an ihrer Oberseite mit zugehörigen U-Scheiben (15) gespannt sind, wobei die Stützplatte (9) entweder direkt auf dem Fundamentblock (13) ruht, oder über eine zusätzliche halbsteife Sohle (19), die Durchgangslöcher (20) für die Versiegelungsstangen (12) aufweist, oder auf Muttern (16) mit zugehörigen U-Scheiben (17), die vorher an den Versiegelungsstangen (12) angeschraubt wurden, wobei gegebenenfalls die gesamte Stützplatte (9) und die Versiegelungsstangen (11) von einem Betonblock (21) abgedeckt werden,
. man die Operationen des ersten Schritts und des zweiten Schritts durchführt,
. man sämtliche der genannten Parameter ab den Kurven C1 und C2 bestimmt,
. und man die genannten Parameter dahingehend deutet, dass davon eine Schlussfolgerung über den Zustand des Montagesystems des Schafts (6) abgeleitet werden kann, und zwar über den Zustand des Fundamentblocks (3), der Stützplatte (9), der eventuellen Versteifungsstücke (10), der Versiegelungsstangen (12), der Muttern (14) und der eventuellen Gegenmuttern, der eventuellen halbsteifen Sohle (19), der eventuellen Muttern (16) und der dazugehörigen U-Scheiben (17), und ihrer jeweiligen Verbindungen, und man ihre eventuellen Pathologien bestimmt.

2. Verfahren gemäß Anspruch 1, **dadurch gekennzeichnet, dass** man die Belastungskurve C1 und die Entlastungskurve C2, die quasi linear und parallel verlaufen, und eine sehr kleine Restverschiebung Dr, dahingehend auslegt, dass das Mastträgersystem 1 hinsichtlich seines Materials keine Plastizität und hinsichtlich des Montagesystems 4 keine Unordnung aufweist, wobei die Belastungs- und Entlastungskurven C1 und C2 als normal oder Bezugskurven qualifiziert werden.

3. Verfahren gemäß Anspruch 1, **dadurch gekennzeichnet, dass** man eine Belastungskurve C1 und eine Entlastungskurve C2, die quasi linear und parallel verlaufen, die für F=0 Neigungen α1 und α2 niedriger als die Normale haben und eine mittlere bis große Restverschiebung Dr in Bezug auf die Normale, dahingehend auslegt, dass sie aus einer Montage "auf Muttern" resultieren, die zu einer schwächeren Steifigkeit des Systems oder zu einer Unordnungspathologie bezüglich einer Versiegelungsstange (11) oder ihrer Spannmutter (14) führt.

4. Verfahren gemäß Anspruch 1, **dadurch gekennzeichnet, dass** man eine Belastungskurve C1, die für F=0 eine Neigung α1 niedriger als die Normale und dann schnell eine Neigung hat, die fast der Normalen entspricht, und eine Entlastungskurve C2 nahe der Kurve C1, dahingehend auslegt, dass sie eine gelöste Spannmutter (14) oder ein Montagesystem (4) aufweist, das ein Spiel oder eine Plastizität im Bereich der Tür (8) hat.

5. Verfahren gemäß Anspruch 1, **dadurch gekennzeichnet, dass** man eine Belastungskurve C1 und eine Entlastungskurve C2, die linear verlaufen aber eine leichte Krümmung aufweisen können, mit Neigungen α1 und α2, die deutlich für F=0 unterschiedlich sind, und einer Restverschiebung Dr größer als die Normale, dahingehend auslegt, dass eine Unordnung im Fundamentblock (13) besteht, wie zum Beispiel ein unstabiler oder unterbemessener Block, oder auch ein Boden (5), der einen zu geringen Druck aufweist.

6. Verfahren gemäß Anspruch 1, **dadurch gekennzeichnet, dass** man eine Belastungskurve C1, die für F=0 eine Neigung α1 niedriger als die Normale und dann schnell eine Neigung hat, die fast der Normalen entspricht, und eine Entlastungskurve mit Neigungen α1 und α2, die deutlich für ein beliebiges F unterschiedlich sind, und eine Restverschiebung Dr größer als die Normale, dahingehend auslegt, dass ein unstabiler Fundamentsblock (13) mit Spiel zwischen dem Fundamentblock (13) und dem Boden (5) oder unterbemessen mit Spiel zwischen dem Fundamentblock (13) und dem Boden (5), oder eine unzureichend gespannte Mutter und ein unstabiler Fundamentblock (13) vorliegen.

7. Verfahren gemäß Anspruch 1, **dadurch gekennzeichnet, dass** man eine quasi lineare Belastungskurve C1 mit Einknickpunkt, eine quasi lineare Entlastungskurve C2, die parallel zu den linearen Abschnitten der Belastungskurve C1 verläuft, und eine Restverschiebung Dr, die größer ist als die Normale, dahingehend auslegt, dass eine aus dem Fundamentblock (13) heraustretende Versiegelungsstange (11) vorliegt, sowie ein Schaft (6) des Masts (3), der nicht in seine Ausgangsposition zurückkehrt.

8. Verfahren gemäß Anspruch 1, **dadurch gekennzeichnet, dass** man eine quasi lineare Belastungskurve C1 mit Einknickpunkt, eine quasi lineare Entlastungskurve C2 mit Einknickpunkt, die quasi parallel zur Belastungskurve C1 verlaufen kann, dahingehend auslegt, dass eine aus dem Fundamentblock (13) heraustretende Versiegelungsstange (11) vorliegt, sowie ein Schaft (6) des Masts (3), der danach wieder in seine Ausgangsposition zurückkehrt.

9. Verfahren gemäß Anspruch 1, **dadurch gekennzeichnet, dass** man eine Belastungskurve C1, die ab F=0 nicht linear ist, mit sehr schnell einer Abnahme der Neigung α1, die dann nach Wiedererlangung einer normalen Neigung quasi linear ist, eine quasi lineare Entlastungskurve C2, die parallel zum linearen Abschnitt der ersten verläuft, und eine Restverschiebung Dr, die größer ist als die Normale, dahingehend auslegt, dass eine Versiegelungsstange (11) vorliegt, die ursprünglich aus dem Fundamentblock (13) herausragt und dann wieder dort eintritt bei einer Montage "auf Muttern", oder ein Schaft (6) des Masts (3), der ursprünglich von der Normalen abweicht, dann aber wieder eine so genannte normale Position einnimmt, typisch eine vertikale Position.

10. Verfahren gemäß Anspruch 1, **dadurch gekennzeichnet dass** man eine Belastungskurve C1, die relativ linear ist, jedoch eine leichte Krümmung aufweisen kann, eine Entlastungskurve C2, die eine bedeutende Abrundung gegen F=0 aufweist, und eine mittlere bis große Restverschiebung Dr als die Normale dahingehend auslegt, dass eine unzureichend gespannte oder fehlende Mutter (14) vorliegt, mit einer Montage "auf halbsteifer Sohle".

11. Verfahren gemäß Anspruch 1, **dadurch gekennzeichnet, dass** man eine ab F=0 quasi lineare Belastungskurve C1, die danach eine bedeutende Verringerung der Neigung α1 aufweist, die dann positiv bleibt, eine Entlastungskurve C2, die quasi linear und parallel zu C1 über deren linearen Abschnitt verläuft, und eine mittlere bis große Restverschiebung Dr als die Normale dahingehend auslegt, dass eine Kaltverfestigung des Materials der Stützplatte (9), der Versiegelungsstangen (11), der U-Scheiben oder des Schafts (6) des Masts (3) selbst unter der Beaufschlagungszone (22) der Kräfte F1 und F2 vorliegt, oder auch ein Riss unter dieser Zone (22).

12. Verfahren gemäß Anspruch 1, **dadurch gekennzeichnet, dass** man eine ab F=0 quasi lineare Belastungskurve C1, die danach eine bedeutende Verringerung der Neigung α1 aufweist, die dann negativ wird, eine Entlastungskurve C2, die quasi linear und parallel zu C1 über deren linearen Abschnitt verläuft, und eine mittlere bis große Restverschiebung Dr als die Normale dahingehend auslegt, dass eine Querkontraktion des Materials der Stützplatte (9), der Versiegelungsstangen (11), des Schafts (6) des Masts (3) selbst unter der Beaufschlagungszone (22) der Kräfte F1 und F2 vorliegt, oder auch ein Riss unter dieser Zone (22).

13. Verfahren gemäß Anspruch 1, **dadurch gekennzeichnet, dass** man eine Belastungskurve C1, die für F=0 eine kleinere Neigung α1 als die Normale aufweist, die dann schnell in eine Neigung α1 nahe der Normalen übergeht und eine bedeutende Verringerung der Neigung α1 aufweist, die positiv bleibt, eine Entlastungskurve C2, die quasi linear und parallel zu C1 über deren linearen Abschnitt verläuft, und eine mittlere bis große Restverschiebung Dr als die Normale dahingehend auslegt, dass eine Kaltverformung des Materials der Stützplatte (9), der Versiegelungsstangen (11), der U-Scheiben, des Schafts (6) des Masts (3) selbst unter der Beaufschlagungszone (22) der Kräfte F1 und F2 vorliegt, oder auch ein Riss unter dieser Zone (22).

14. Verfahren gemäß Anspruch 1, **dadurch gekennzeichnet, dass** man eine Belastungskurve C1, die für F=0 eine kleinere Neigung α1 als die Normale aufweist, die dann in eine Neigung α1 nahe der Normalen übergeht und eine bedeutende Verringerung der Neigung α1 aufweist, die negativ wird, eine Entlastungskurve C2, die quasi linear und parallel zu C1 über deren linearen Abschnitt verläuft, und eine mittlere bis große Restverschiebung Dr als die Normale dahingehend auslegt, dass eine Querkontraktion des Materials der Stützplatte (9), der Versiegelungsstangen (11), des Schafts (6) des Masts (3) selbst unter der Beaufschlagungszone (22) der Kräfte F1 und F2 vorliegt, oder auch ein Riss unter dieser Zone (22).

15. Verfahren nach Anspruch 1, **dadurch gekennzeichnet, dass** man eine Belastungskurve C1, die ab F=0 quasi linear verläuft und erst viel später die Neigung für eine größere Neigung wechselt, eine Entlastungskurve C2 nach der Kurve C1, und eine mittlere bis große Restverschiebung Dr als die Normale dahingehend auslegt, dass eine Plastizität des Materials vorliegt, zwischen der Beaufschlagungszone der Kräfte F1 und F2 und der Messzone (28) der Verschiebungen D1 und D2, oder auch eine gelöste Spannmutter (14) oder ein Riss.

16. Verfahren nach Anspruch 1, **dadurch gekennzeichnet, dass** man eine Belastungskurve C1, die ab F=0 relativ linear verläuft und dann eine sehr bedeutende Verringerung der Neigung α1 aufweist, mit einer Verschiebung D1 gleich null und einer Verringerung der Kraft F1, eine relativ lineare Entlastungskurve C2 mit einer anderen Neigung α2 und typisch kleiner als α1, und eine kleine Restverschiebung Dr dahingehend auslegt, dass eine Querkontraktionszone vorliegt oder ein Riss des Materials zwischen der Beaufschlagungszone der Kräfte F1 und F2 und der Messzone (28) der Verschiebungen D1 und D2.

17. Verfahren nach Anspruch 1, **dadurch gekennzeichnet, dass** man eine Belastungskurve C1, die für F=0 eine kleinere Neigung α1 als die Normale hat und dann schnell eine Neigung α1 nahe der Normalen, und die eine bedeutende Verringerung der Neigung α1 aufweist, die positiv bleibt, und eine Entlastungskurve C2, die über ihre beiden ersten Teile quasi parallel zur Kurve C1 verläuft, und die für F=0 eine kleinere Neigung α2 als die Normale oder sogar von Null aufweist, dahingehend auslegt, dass eine gelöste Mutter (14) oder eine Plastizität des Materials vorliegt.

18. Verfahren nach Anspruch 1, **dadurch gekennzeichnet, dass** man eine ab F=0 relativ lineare Belastungskurve C1, die dann eine sehr bedeutende Verringerung der Neigung α1 aufweist, mit einer Verschiebung D1 quasi gleich null und Verringerung der Kraft F1, eine relativ lineare Entlastungskurve C2 mit einer anderen und typisch größeren Neigung α2 als α1, und eine größere Restverschiebung Dr als die Normale, dahingehend auslegt, dass eine Querkontraktionszone vorliegt zwischen der Beaufschlagungszone (22) der Kräfte F1 und F2 und der Messzone (28) der Verschiebungen D1 und D2, insbesondere im Bereich der Stützplatte (8).

19. Verfahren nach einer der Ansprüche 1 bis 18, **dadurch gekennzeichnet, dass** man nach dem zweiten Schritt:
• in einem dritten Schritt,
- die Operationen des ersten Schritts in Richtung x-x wiederholt, aber in die entgegen gesetzte Richtung, wobei die Beaufschlagung mit der Kraft F1' eine seitliche Abweichung D1' des Schafts (6) bewirkt,
- die angewendete Kraft F1' und die Abweichung D1' misst, und die Funktion f1' der Kraft F1' etabliert entsprechend der Abweichung D1' oder ihrer repräsentativen Kurve C1', die so genannte Belastungskurve, auf einem Graph Kraft F / Abweichung D,
• in einem vierten Schritt,
- die Operationen des zweiten Schritts in Richtung x-x wiederholt, aber in die der Beaufschlagungsrichtung der Kraft F1' entgegen gesetzte Richtung,
- die angewendete Kraft F2' und die Abweichung D2' misst, und die Funktion f2' der Kraft F2' etabliert entsprechend der Abweichung D2' oder ihrer repräsentativen Kurve C2', die so genannte Entlastungskurve, auf einem Graph Kraft F / Abweichung D,
• in einer späteren Phase ab den Kurven C'1 und C'2 die gleichen Parameter bestimmt wie für die Kurven C1 und C2,
• dann die genannten Parameter auslegt, um eine zusätzliche Schlussfolgerung zu erhalten hinsichtlich der Ausrichtung, des Zustands des Montagesystems des Schafts (6), und zwar über den Zustand des Fundamentblocks (3), der Stützplatte (9), der eventuellen Versteifungsstücke (10), der Versiegelungsstangen (12), der Muttern (14) und der eventuellen Gegenmuttern, der eventuellen halbsteifen Sohle (19), der eventuellen Muttern (16) und der dazugehörigen U-Scheiben (17), und ihrer jeweiligen Verbindungen, und man ihre eventuellen Pathologien bestimmt.

20. Verfahren gemäß Anspruch 19, **dadurch gekennzeichnet, dass** man nach dem vierten Schritt:
• in einem fünften Schritt,
- die Operationen des ersten Schritts in Richtung y-y, etwa lotrecht zur Richtung x-x, wiederholt, wobei die Beaufschlagung mit der Kraft F1 eine seitliche Abweichung D1 des Masts bewirkt,
- die angewendete Kraft F1 und die Abweichung D1 misst, und die Funktion f1 der Kraft F1 etabliert entsprechend der Abweichung D1 oder ihrer repräsentativen Kurve C1, die so genannte Belastungskurve, auf einem Graph Kraft F / Abweichung D,
• in einem sechsten Schritt,
- die Operationen des zweiten Schritts in Richtung y-y wiederholt, aber in die der Beaufschlagungsrichtung der Kraft F1 entgegen gesetzte Richtung,
- die angewendete Kraft F2 und die Abweichung D2 misst, und die Funktion f2 der Kraft F2 etabliert entsprechend der Abweichung D2 oder ihrer repräsentativen Kurve C2, die so genannte Entlastungskurve, auf einem Graph Kraft F / Abweichung D,
• in einem siebten Schritt,
- die Operationen des fünften Schritts in Richtung y-y, aber in entgegen gesetzter Richtung wiederholt, wobei die Beaufschlagung mit der Kraft F1' eine seitliche Abweichung D1' des Masts bewirkt,
- die angewendete Kraft F1' und die Abweichung D1' misst, und die Funktion f1' der Kraft F1' etabliert entsprechend der Abweichung D1' oder ihrer repräsentativen Kurve C1', die so genannte Belastungskurve, auf einem Graph Kraft F / Abweichung D,
• in einem achten Schritt,
- die Operationen des sechsten Schritts in Richtung y-y wiederholt, aber in entgegen gesetzter Richtung, wobei die Beaufschlagung mit der Kraft F2' eine seitliche Abweichung D2' des Masts bewirkt,
- die angewendete Kraft F2' und die Abweichung D2' misst, und die Funktion f2' der Kraft F2' etabliert entsprechend der Abweichung D2' oder ihrer repräsentativen Kurve C2', die so genannte Entlastungskurve, auf einem Graph Kraft F / Abweichung D,
- in einer späteren Phase ab den Kurven C1, C2, C'1 und C'2, die in Richtung y-y realisiert wurden, die gleichen Parameter bestimmt wie für die Kurven C1, C2, C'1 und C'2, die in Richtung x-x realisiert wurden,
• dann die genannten Parameter auslegt, um eine zusätzliche Schlussfolgerung zu erhalten hinsichtlich der Ausrichtung, des Zustands des Montagesystems des Schafts (6), und zwar über den Zustand des Fundamentblocks (3), der Stützplatte (9), der eventuellen Versteifungsstücke (10), der Versiegelungsstangen (12), der Muttern (14) und der eventuellen Gegenmuttern, der eventuellen halbsteifen Sohle (19), der eventuellen Muttern (16) und der dazugehörigen U-Scheiben (17), und ihrer jeweiligen Verbindungen, und man ihre eventuellen Pathologien bestimmt.

21. Verfahren gemäß einem der Ansprüche 1 bis 20, **dadurch gekennzeichnet, dass** die Richtung x-x etwa lotrecht zum Ebene der Tür (8) des Mastträgersystems (1) verläuft.

22. Verfahren gemäß einem der Ansprüche 1 bis 21, **dadurch gekennzeichnet, dass** die Richtung x-x etwa um 45° in Bezug auf die Ebene der Tür (8) des Mastträgersystems (1) ausgerichtet ist.

23. Vorrichtung für die Umsetzung des Verfahrens gemäß einem der Ansprüche 1 bis 22, umfassend:
- Mittel, um den Schaft (6) des Masts (3) über dem Fundamentblock (13) und der Stützplatte (9) und in einer Kraftbeaufschlagungszone (22) mit einer etwa horizontalen Kraft zu beaufschlagen, die zunimmt und dann wieder abnimmt,
- Messmittel der den Schaft (6) des Masts beaufschlagenden Kraft, in einer Kraftmesszone (27),
- Messmittel der Abweichung des Schafts (6) des Masts, die von den aufgebrachten Kräften verursacht wurde,
- Bearbeitungsmittel, die geeignet sind, die Funktion f der angewendeten Kraft F zu etablieren, in einer gegebenen Richtung entsprechend der Abweichung D bzw. ihrer repräsentativen Belastungs- oder Entlastungskurve auf einem Graph Kraft F / Abweichung D,
- Bearbeitungsmittel, die geeignet sind, ab den Kurven sämtliche für die Kontrolle erforderlichen Parameter zu bestimmen, und daraus Schlussfolgerungen zu ziehen hinsichtlich des Zustands des Schafts (6), des Montagesystems des Schafts (6), und zwar über den Zustand des Fundamentblocks (3), der Stützplatte (9), der eventuellen Versteifungsstücke (10), der Versiegelungsstangen (12), der Muttern (14) und der eventuellen Gegenmuttern, der eventuellen halbsteifen Sohle (19), der eventuellen Muttern (16) und der dazugehörigen U-Scheiben (17), und ihrer jeweiligen Verbindungen, und ihre eventuellen Pathologien zu bestimmen.

24. Vorrichtung gemäß Anspruch 23, **dadurch gekennzeichnet, dass** sie ferner Anzeige- und/oder Druckmittel der Belastungs- und Entlastungskurven umfasst.

25. Vorrichtung gemäß einem der Ansprüche 23 und 24, **dadurch gekennzeichnet, dass** sie ferner Vergleichsmittel der Belastungs- und Entlastungskurven mit theoretischen Kurven, die bestimmten Pathologien entsprechen, umfasst.
